# EUROPEAN PATENT SPECIFICATION

(11) **EP 3 084 980 B1**
(45) Date of publication and mention of the grant of the patent: **08.07.2020**
(21) Application number: 13805881.3
(22) Date of filing: 16.12.2013
(51) Int. Cl.: H04B 7/06, H04B 7/0408, H04B 7/08, H04W 52/42

(54) **METHODS AND DEVICES FOR ADJUSTING BEAM WIDTH IN A WIRELESS COMMUNICATION SYSTEM**
VERFAHREN UND VORRICHTUNGEN ZUR EINSTELLUNG DER STRAHLBREITE IN EINEM DRAHTLOSKOMMUNIKATIONSSYSTEM
PROCÉDÉS ET DISPOSITIFS DE RÉGLAGE DE LARGEUR DE FAISCEAU DANS UN SYSTÈME DE COMMUNICATION SANS FIL

(43) Date of publication of application: 26.10.2016
(73) Proprietor: Huawei Technologies Co., Ltd., Longgang District Shenzhen, Guangdong 518129 (CN)
(72) Inventor: CAI, Tao, S-164 40 Kista (SE); DU, Yinggang, S-164 40 Kista (SE); LUNDQVIST, Henrik, S-164 40 Kista (SE); SALMI, Jussi, S-164 40 Kista (SE)
(74) Representative: Gill Jennings & Every LLP
(86) International application number: PCT/EP2013/076749
(87) International publication number: WO 2015/090353

(56) References cited:
- WO-A1-2013/125993
- US-A1- 2008 171 516
- US-A1- 2013 286 960

## Description

### TECHNICAL FIELD

Implementations described herein generally relate to a first communication device, a method in a first communication device, a second communication device, and a method in a second communication device. More in particular, they pertain to a mechanism for adjusting beam shape of an antenna beam in a radio link between the first communication device and the second communication device, wherein the beam shape being adjustable into a plurality of beam width modes such as narrow beam width mode and wide beam width mode.

### BACKGROUND

A millimetre wave is a radio wave having a wavelength between 1 mm and 10 mm. The frequency of the millimetre wave is from 30GHz to 300GHz. Sometimes, a radio wave with frequency above 3GHz is called millimetre wave. A millimetre wave, or millimetre band, are sometimes abbreviated MMW or mmW and may also be referred to as Extremely High Frequency (EHF), or International Telecommunication Union (ITU) radio band number 11.

As low frequency spectrum becomes crowded with all kinds of radio services, the research community and wireless industry look into the usage of the millimetre wave format for the purpose of e.g. establish a backhaul link for an access point/ network node, as well as the access link between the access point/ network node and a mobile terminal.

There are special aspects of millimetre wave radio from the perspective of its antenna design. The millimetre wave radio will capture smaller energy, due to higher frequency, and higher noise power, due to normally wider millimetre wave radio channel bandwidth. Millimetre wave radio also suffers from lower signal-to-noise ratio, SNR. However it can be compensated by higher antenna gains with higher antenna directionality. Since the wavelength of millimetre waves is smaller than for radio waves in the lower spectral band, the antenna size is smaller for millimetre wave radio. A convenient antenna size of millimetre wave radio may be approximately between 1 mm and 10 mm. Thus it is possible to apply multiple antennas, also in the mobile terminal, without affecting portability.

Thus the first communication device, which may be an access point/ network node and a second communication device, which may be a mobile terminal or User Equipment (UE), of millimetre radio can accommodate more antenna elements; hence narrower beams can be produced with large number of antenna elements which will yield higher antenna gains. Further, a narrower beam width may be achieved in millimetre wave radio than lower frequency radio. Advantages therewith comprise increased interference protection and spectrum reuse. The highly directional and narrow radiation pattern from millimetre wave radios allows many radio devices to be deployed near each other without causing troublesome interference even when they are using the same frequencies.

Since millimetre waves have a narrow beam width and are easily blocked by many solid structures they also create an inherent level of security. In order to sniff millimetre wave radiation, a receiver would have to be setup very near, or in the path of, the radio connection.

Narrower beam is beneficial for the purpose of providing higher antenna gains, causing less multi-path fading as well as minimising cross link interference. To establish and maintain link between the first communication device and the second communication device via narrow beam requires however consideration for the design, operation and optimisation of the millimetre wave radio system.

In such millimetre wave radio system, the mobile terminal, due to mobility of the user can be located at different positions; thus the direction of the antenna beam may change in a possibly fast and unpredictable manner. Thus the direction to, and from, the access point needs to be determined to assist the beam forming.

However, as the mobile terminal can be moved around linearly and also turned around angularly around different axis, in relation to the access point/ network node in an unpredictable manner, an established radio connection between the access point/ radio network node and the mobile terminal may easily be broken.

Thus it is a problem to set up a millimetre wave radio link between the access point and the mobile terminal, and also maintain the connection when the mobile terminal is moved around as well as when the mobile terminal is turned around.

In order for the access point/ network node to direct its antenna beam towards the mobile terminal when it is moved and/ or turned around, quick update and reporting of the current position of the mobile terminal and/ or direction of the antenna beam of the mobile terminal, to the access point/ network node is required.

A problem therewith is that a lot of overhead signalling between the mobile terminal and the access point/ network node is required, for forwarding information related to position and direction of the antenna beam of the mobile terminal. Thereby the overall throughput of the wireless communication system is affected. Also, uplink interference within in the wireless communication system is increased.

Another problem is that when the mobile terminal is moving around fast (angularly and/ or linearly), the connection link between the mobile terminal and the access point/ network node may be lost. If/ when that occurs, there is no convenient way of recovering the lost connection link, besides restarting the whole access process. Thus the terminal's orientation measurement to turn the direction of the antenna beam might not be able to follow the terminal's movement/turning or those solutions will require high load of signalling.

A further problem is to apply multiple access links to/ from multiple access points/ network nodes in a millimetre radio wave environment. It is unsolved how to utilise multiple access points/ network nodes when the mobile terminal is moving around fast.

Yet a problem is that the known prior art solution with continuous antenna pattern updates may become computation heavy and cost resource for compensating fast movement of the mobile terminal.

A further problem, in a scenario where two network nodes, such as a macro radio node and a micro radio node or a base station and a repeater, are establishing a backhaul link in a millimetre radio network environment, it may be a problem to align the respective antenna beams, as the antenna beams, in particular in a millimetre radio network environment, are narrow; thus time-consuming re-direction of the network nodes may be required, which may have to be re-made after an incidental removal of one of the network nodes, etc. Further, in case the network nodes in the backhaul link are situated e.g. in lamp posts, poles, masts or similar, they may be moving in relation to each other due to windy conditions, which in some cases may cause a lost backhaul communication.

Thus, there are several obstacles to overcome in order for millimetre radio to become feasible when at least one of the communicating entities is moving and/ or rotating in high speed. WO 2013/125993 relates to method and arrangement for determining a beam parameter of an antenna in a wire-less communications system. US 2008/0171516 relates to wireless communication apparatus and antenna directivity/radio resource assigning method. US 2013/0286960 relates to apparatus and method for control channel beam management in a wireless system with a large number of antennas.

### SUMMARY

It is therefore an object to obviate at least some of the above mentioned disadvantages and to improve the performance in a wireless communication system.

This and other objects are achieved by the features of the appended independent claims. Further implementation forms are apparent from the dependent claims, the description and the figures.

A method may be provided in a second communication device, for adjusting beam shape of the second communication device antenna beam in a radio link between a first communication device and the second communication device. The beam shape is adjustable into a narrow beam width mode and a wide beam width mode. The method comprises measuring orientation information of the second communication device. Further the method comprises calculating speed information related to the second communication device, based on the measured orientation information. Also, the method further comprises adjusting beam shape of the second communication device antenna beam into any of the narrow beam width mode, or the wide beam width mode, based on the calculated speed information.

The orientation information of the second communication device may comprise the direction and/ or the position of the second communication device. The calculated speed information may comprise e.g. angular speed of the second communication device and/ or linear speed of the second communication device.

Optionally the beam shape of the second communication device antenna beam is adjustable by beamforming the second communication device antenna beam through phase control of signals at an antenna of the second communication device and/ or by changing operation spectral band for both the first communication device and the second communication device, wherein a high frequency is used in narrow beam width mode and a low frequency is used in wide beam width mode.

Optionally the method may further comprise comparing the calculated speed information with a threshold limit. The second communication device antenna beam may be adjusted into the narrow beam width mode when the calculated speed information is below the threshold limit and adjusted into the wide beam width mode when the speed information exceeds the threshold limit.

Optionally the calculated speed information may comprise: angular speed of the second communication device and/ or linear speed of the second communication device.

Optionally the method also may comprise determining operational mode of the second communication device, and wherein the adjustment of the second communication device antenna beam shape may be based on the determined operational mode.

Optionally the second communication device antenna beam may be adjusted into the wide beam width mode when the determined operational mode is IDLE.

Optionally the method may also comprise increasing transmission power of the second communication device antenna beam when it is adjusted into the wide beam width mode.

Optionally the method further may comprise, when the second communication device antenna beam is adjusted from one mode to another mode, informing the first communication device of the second communication device antenna beam mode change.

Optionally the method also may comprise providing information comprising the measured orientation information, the calculated speed information, the determined operational mode of the second communication device, an indication of second communication device antenna beam mode change and/ or operation spectral band change, to the first communication device.

Optionally the direction of the second communication device antenna beam may be adjusted based on the measured orientation information.

Optionally the operation spectral band for both the first communication device and the second communication device may be changed to another operation spectral band when the beam shape mode of the second communication device antenna beam is adjusted.

Optionally the antenna beam of the second communication device is adjustable into a plurality of beam width modes, each associated with a second communication device speed threshold limit interval between an upper threshold limit and a lower threshold limit.

Optionally the second communication device may be represented by a mobile terminal and the first communication device is represented by a network node.

A second communication device may be provided for adjusting beam shape of the second communication device antenna beam in a radio link between a first communication device and the second communication device. The beam shape is adjustable into a narrow beam width mode and a wide beam width mode. The second communication device comprises a sensor, configured for measuring orientation information of the second communication device. Also, the second communication device comprises a processor, configured for calculating speed information related to the second communication device, based on the measured orientation information, and also configured for adjusting beam shape of the second communication device antenna beam into any of the narrow beam width mode or the wide beam width mode, based on the calculated speed information.

Optionally the processor may be further configured for adjusting the beam shape of the second communication device antenna beam by beamforming the second communication device antenna beam through phase control of signals at an antenna of the second communication device and/ or by changing operation spectral band for both the first communication device and the second communication device, wherein a high frequency is used in narrow beam width mode and a low frequency is used in wide beam width mode.

Optionally the processor may be further configured for implementing the method according to the first aspect, or any possible implementation of the first aspect.

A computer program may be provided, comprising program code for performing a method according to the first aspect, or any possible implementation of the first aspect, for adjusting beam shape of a second communication device antenna beam in a radio link between a first communication device and the second communication device. The beam shape being adjustable into a narrow beam width mode and a wide beam width mode, when the computer program is loaded into a processor of the second communication device, according to the second aspect, or any possible implementation of the second aspect.

Another computer program product may be provided, comprising a computer readable storage medium storing program code thereon for adjusting beam shape of a second communication device antenna beam in a radio link between a first communication device and the second communication device. The beam shape is adjustable into a narrow beam width mode and a wide beam width mode. The program code comprises instructions for executing a method comprising: measuring orientation information of the second communication device; calculating speed information related to the second communication device, based on the measured orientation information; and adjusting beam shape of the second communication device antenna beam into any of the narrow beam width mode or the wide beam width mode, based on the calculated speed information.

Another a computer program product may be provided, comprising a computer readable storage medium storing program code thereon for adjusting beam shape of a second communication device antenna beam in a radio link between a first communication device and the second communication device. The beam shape is adjustable into a narrow beam width mode and a wide beam width mode. The program code comprises instructions for executing a method according to the first aspect, or any possible implementation of the first aspect.

A method in a first communication device may be provided, for adjusting a beam shape of a first communication device antenna beam in a radio link between the first communication device and a second communication device. The beam shape is adjustable into a narrow beam width mode and a wide beam width mode. The method comprises receiving information from the second communication device; and adjusting beam shape of the first communication device antenna beam into any of the narrow beam width mode or the wide beam width mode, based on the received information.

The received information may comprise e.g. orientation information measured on the second communication device, speed information of the second communication device, operational mode of the second communication device and/ or an indication of an antenna beam mode change and/ or operation spectral band change at the second communication device.

Optionally the beam shape of the first communication device antenna beam is adjustable by beamforming the first communication device antenna beam through phase control of signals at an antenna of the first communication device and/ or by changing operation spectral band for both the first communication device and the second communication device, wherein a high frequency is used in narrow beam width mode and a low frequency is used in wide beam width mode.

Optionally, or any previous implementation of the fifth aspect the received information comprises: orientation information measured on the second communication device, speed information of the second communication device, operational mode of the second communication device, an indication of an antenna beam mode change and/ or operation spectral band change at the second communication device.

Optionally or any previous implementation of the fifth aspect, the method may further comprise estimating speed information of the second communication device, based on the received information; and comparing the estimated speed information with a threshold limit; and wherein the first communication device antenna beam is adjusted into the narrow beam width mode when the estimated speed information is below the threshold limit and adjusted into the wide beam width mode when the speed information exceeds the threshold limit.

Optionally the speed information of the second communication device may comprise: angular speed of the second communication device and/ or linear speed of the second communication device.

Optionally the received information may comprise operational mode of the second communication device, and wherein the adjustment of the first communication device antenna beam shape may be based on the operational mode of the second communication device.

Optionally the first communication device antenna beam may be adjusted into the wide beam width mode when the operational mode of the second communication device is IDLE.

Optionally the transmission power of the first communication device antenna beam may be increased when the beam shape of the first communication device antenna beam is adjusted into the wide beam width mode.

Optionally the method may further comprise receiving information related to a change of second communication device antenna beam mode, and wherein the adjustment of the beam shape of the first communication device antenna beam may be made in order to correspond to the antenna beam mode of the second communication device.

Optionally the direction of the first communication device antenna beam may be adjusted based on the received information from the second communication device.

Optionally the operation spectral band for both the first communication device and the second communication device is changed to another operation spectral band when the beam shape mode of the first communication device antenna beam is adjusted.

Optionally the second communication device may be assigned a decreased spectral band width when the first communication device antenna beam is adjusted from the narrow beam width mode into the wide beam width mode.

Optionally the first communication device antenna beam may be adjusted from one mode to another mode, informing the second communication device of the first communication device antenna beam mode change.

Optionally the second communication device may be configured for communicating with a plurality of first communication devices and wherein the number of first communication devices communicating with the second communication device may be determined based on the information received from the second communication device.

Optionally the number of first communication devices for communicating with the second communication device may be determined in proportionality with the estimated speed information of the second communication device such that more first communication devices may be communicated with the second communication device when a high speed information of the second communication device is estimated than when a low speed information is estimated.

Optionally the antenna beam of the first communication device may be adjustable into a plurality of beam width modes, each associated with a first communication device speed threshold limit interval between an upper threshold limit and a lower threshold limit.

A first communication device may be provided, for adjusting a beam shape of a first communication device antenna beam in a radio link between the first communication device and a second communication device. The beam shape is adjustable into a narrow beam width mode and a wide beam width mode. The first communication device comprises a processor, configured for obtaining information from the second communication device. Also, the processor is further configured for adjusting beam shape of the first communication device antenna beam into any of the narrow beam width mode or the wide beam width mode, based on the received information.

Optionally the processor may be further configured for implementing the method according to the fifth aspect, or any previous implementation of the fifth aspect.

A computer program may be provided, comprising program code for performing a method according to the fifth aspect, or any previous implementation of the fifth aspect, for adjusting a beam shape of a first communication device antenna beam in a radio link between a first communication device and a second communication device. The beam shape being adjustable into a narrow beam width mode and a wide beam width mode, when the computer program is loaded into a processor of the first communication device, according to the sixth aspect, or any possible implementation of the sixth aspect.

Another computer program product may be provided, comprising a computer readable storage medium storing program code thereon for adjusting beam shape of a first communication device antenna beam in a radio link between a first communication device and a second communication device. The beam shape is adjustable into a narrow beam width mode and a wide beam width mode. The program code comprises instructions for executing a method comprising receiving information from the second communication device; and adjusting beam shape of the first communication device antenna beam into any of the narrow beam width mode or the wide beam width mode, based on the received information.

Another a computer program product may be provided, comprising a computer readable storage medium storing program code thereon for adjusting beam shape of a first communication device antenna beam in a radio link between a first communication device and a second communication device. The beam shape is adjustable into a narrow beam width mode and a wide beam width mode. The program code comprises instructions for executing a method according to the fifth aspect, or any previous implementation of the fifth aspect.

Thanks to the herein described aspects and implementations, it is possible to uphold a communication link between the first communication device and the second communication device, also when they are moving with an angular high speed in relation to each other. By establishing a relation between angular speed of the second communication device, and beam width of the antenna beam of the second communication device and the first communication device, wherein a wider beam width is utilised, the higher the angular speed of the second communication device become, it is avoided that the communication link is lost when the angular speed become too fast for enabling the first communication device to adjust the antenna direction fast enough to follow the second communication device antenna beam, and/ or vice versa. Also, by changing into wide antenna beam mode, less overhead data is required to be transmitted between first communication device and second communication device, which result in a more efficient use of transmission resources, compared with using narrow beam mode. By letting the second communication device inform the first communication device when the second communication device antenna pattern is changed, the first communication device is enabled to simultaneously change antenna pattern at the first communication device side, without making any further calculations. Thereby, time and communication resource are saved. By adapting the number of first communication devices communicating with the second communication device based on the angular speed of the second communication device, the risk of losing the communication link between the first communication devices and the second communication device is further reduced. Thus an improved performance within the wireless communication system is provided.

Other objects, advantages and novel features of the aspects of the disclosed solutions will become apparent from the following detailed description.

### BRIEF DESCRIPTION OF THE DRAWINGS

Various embodiments are described in more detail with reference to attached drawings in which:
- **Figure 1A**: is an illustration of overall system architecture.
- **Figure 1B**: is an illustration of a second communication device, movable in linear and angular directions.
- **Figure 1C**: is an illustration of an antenna beam with estimation.
- **Figure 2A**: is a block diagram illustrating a first communication device and a second communication device communicating via narrow antenna beams.
- **Figure 2B**: is a block diagram illustrating a first communication device in narrow beam mode and a second communication device in wide beam mode.
- **Figure 2C**: is a block diagram illustrating a first communication device in wide beam mode and a second communication device in wide beam mode.
- **Figure 2D**: is a block diagram illustrating some beam modes of a first communication device and a second communication device, respectively.
- **Figure 3**: is a flow chart illustrating a method according to some embodiments.
- **Figure 4**: is a flow chart illustrating a method according to some embodiments.
- **Figure 5**: is a flow chart illustrating a method in a second communication device according to an embodiment.
- **Figure 6A**: is a block diagram illustrating a second communication device according to an embodiment.
- **Figure 6B**: is a block diagram illustrating a second communication device according to an embodiment.
- **Figure 7**: is a flow chart illustrating a method in a first communication device according to an embodiment.
- **Figure 8A**: is a block diagram illustrating a first communication device according to an embodiment.
- **Figure 8B**: is a block diagram illustrating a first communication device according to an embodiment.

### DETAILED DESCRIPTION

Embodiments described herein are defined as a first communication device, a method in a first communication device, a second communication device and a method in a second communication device, which may be put into practice in the embodiments described below. These embodiments may, however, be exemplified and realised in many different forms and are not to be limited to the examples set forth herein; rather, these illustrative examples of embodiments are provided so that this disclosure will be thorough and complete.

Still other objects and features may become apparent from the following detailed description, considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

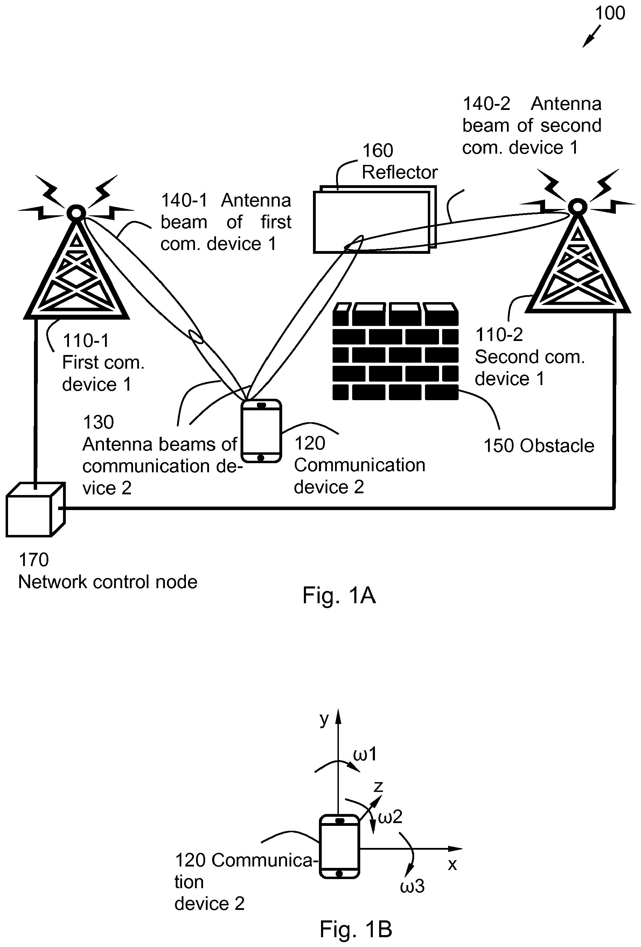

**Figure 1A** is a schematic illustration over a wireless communication system **100** comprising two instances of a first communication device **110-1, 110-2** communicating with a second communication device **120.**

In this illustrated example, one of the first communication devices 110-1 is communicating in a Line-of-Sight (LOS) situation with the second communication device 120. Thus the second communication device antenna beam **130** is aligned with the first communication device antenna beam **140-1** of said first communication device 110-1. The other first communication device 110-2 and the second communication device 120 are communicating in a Non-Line-of-Sight (NLOS) situation. An obstacle **150** blocks direct communication between that first communication device 110-2 and the second communication device 120 in this illustrative example. Such obstacle 150 for the radio waves may comprise e.g. a building, a wall or similar construction, which is blocking the way for the emitted radio waves. Thus the second communication device antenna beam 130 and the first communication device antenna beam **140-2** are not aligned. Instead they are pointing to a common spot, a reflector **160** such that the communication link is established through the reflection of the millimetre wave on the reflector 160. The reflector 160 may comprise e.g. a building, a wall or similar construction suitable for reflecting radio waves.

In some embodiments, e.g. in a multi access point scenario, a subset of the first communication devices 110-1, 110-2 within the wireless communication system 100 may be connected over a wired or wireless connection to a network control node **170.** This may be utilised in particular in some embodiments wherein the communication between the second communication device 120 and the network may be made in a multi access point scenario, over a plurality of first communication devices 110-1, 110-2 simultaneously. Thus, in some embodiments, there may be multiple first communication devices 110-1, 110-2 connecting to one second communication device 120, and/ or the second communication device 120 may be enabled to form multiple antenna beams 130 which are directed towards different directions, addressing different first communication devices 110-1, 110-2, according to some embodiments.

Such optional network control node 170 may in some embodiments comprise a Radio Network Controller (RNC), e.g., in Universal Mobile Telecommunications System (UMTS). The RNC, also sometimes termed Base Station Controller (BSC), e.g., in GSM, may supervise and coordinate various activities of the plurality of first communication devices 110-1, 110-2 connected thereto. GSM is an abbreviation for Global System for Mobile Communications (originally: Groupe Special Mobile). In wireless communication system 100 based on other access technologies; a corresponding master controlling functionality may be comprised in the network control node 170.

The wireless communication system 100, and the therein comprised communication devices 110, 120 may be based on millimetre wave radio, communicating on a frequency approximately between 30 GHz and 300 GHz, in some embodiments. However, in other embodiments, the wireless communication system 100 may be based on other radio access technologies such as, e.g., 3rd Generation Partnership Project (3GPP) Long Term Evolution (LTE), LTE-Advanced, Evolved Universal Terrestrial Radio Access Network (E-UTRAN), Universal Mobile Telecommunications System (UMTS), Global System for Mobile Communications (originally: Groupe Special Mobile) (GSM)/ Enhanced Data rate for GSM Evolution (GSM/EDGE), Wideband Code Division Multiple Access (WCDMA), Time Division Multiple Access (TDMA) networks, Frequency Division Multiple Access (FDMA) networks, Orthogonal FDMA (OFDMA) networks, Single-Carrier FDMA (SC-FDMA) networks, Worldwide Interoperability for Microwave Access (WiMax), or Ultra Mobile Broadband (UMB), High Speed Packet Access (HSPA) Evolved Universal Terrestrial Radio Access (E-UTRA), Universal Terrestrial Radio Access (UTRA), GSM EDGE Radio Access Network (GERAN), 3GPP2 CDMA technologies, e.g., CDMA2000 1x RTT and High Rate Packet Data (HRPD), just to mention some few options. The expressions "wireless communication network", "wireless communication system" and/ or "cellular telecommunication system" may within the technological context of this disclosure sometimes be utilised interchangeably.

The wireless communication system 100 may be communication according to Frequency Division Duplex (FDD) principle, or Time Division Duplex (TDD) principle, in different embodiments. Further, the wireless communication system 100 may be configured for multiple access points and/ or single access points in different embodiments.

The purpose of the illustration in Figure 1A is to provide a simplified, general overview of the wireless communication system 100 and the involved methods, communication devices and nodes, such as first communication devices 110-1, 110-2 and the second communication device 120 herein described, and the functionalities involved.

It is to be noted that the illustrated network setting of two instances of the first communication devices 110-1, 110-2 and one second communication device 120 in Figure 1A is to be regarded as a non-limiting example of an embodiment only. The wireless communication system 100 may comprise any other number and/ or combination of first communication devices 110 and/ or second communication devices 120. A plurality of second communication devices 120 and another configuration of first communication devices 110, comprising also e.g. one first communication device 110, may thus be involved in some embodiments of the disclosed wireless communication system 100.

Thus whenever "one" or "a/ an" second communication device 120 and/ or first communication device 110 is referred to in the present context, a plurality of second communication devices 120 and/ or first communication devices 110 may be involved, according to some embodiments.

The first communication device 110 may according to some embodiments be configured for downlink transmission and may be referred to, respectively, as e.g., a radio network node, access point, base station, NodeB, evolved Node Bs (eNB, or eNodeB), base transceiver station, Access Point Base Station, base station router, Radio Base Station (RBS), micro base station, pico base station, femto base station, Home eNodeB, sensor, beacon device, relay node, repeater or any other network node configured for communication with the second communication device 120 over a wireless interface, depending, e.g., of the radio access technology and/ or terminology used.

The second communication device 120 may correspondingly be represented by, e.g. a User Equipment (UE), a wireless communication terminal, a mobile cellular phone, a Personal Digital Assistant (PDA), a wireless platform, a mobile station, a tablet computer, a portable communication device, a laptop, a computer, a wireless terminal acting as a relay, a relay node, a mobile relay, a Customer Premises Equipment (CPE), a Fixed Wireless Access (FWA) nodes or any other kind of device configured to communicate wirelessly with the first communication device 110, according to different embodiments and different vocabulary.

In the present context, the expressions downlink (DL), downstream link or forward link may be used for the transmission path from a radio network node, to the mobile device. The expression uplink (UL), upstream link or reverse link may be used for the transmission path in the opposite direction, i.e., from the mobile device to the radio network node.

However, in some embodiments, the first communication device 110 may be represented by, e.g. a User Equipment (UE), a wireless communication terminal, a mobile cellular phone, a Personal Digital Assistant (PDA), a wireless platform, a mobile station, a tablet computer, a portable communication device, a laptop, a computer, a wireless terminal acting as a relay, a relay node, a mobile relay, a Customer Premises Equipment (CPE), a Fixed Wireless Access (FWA) nodes or any other kind of device configured to communicate wirelessly with the second communication device 120, according to different embodiments and different vocabulary.

Also, in some embodiments, the second communication device 120 may be configured for downlink transmission and may be referred to, respectively, as e.g., a radio network node, access point, base station, NodeB, evolved Node Bs (eNB, or eNodeB), base transceiver station, Access Point Base Station, base station router, Radio Base Station (RBS), micro base station, pico base station, femto base station, Home eNodeB, sensor, beacon device, relay node, repeater or any other network node configured for communication with the first communication device 110 over a wireless interface, depending, e.g., of the radio access technology and/ or terminology used.

Thus, in some embodiments, the communication link between the first communication device 110 and the second communication device 120 may be a backhaul link, where the first communication device 110 is represented by a fixed node and the second communication device 120 is represented by another fixed node, forming a communication link.

Also, in some embodiments, both the first communication device 110 and the second communication device 120 may be mobile devices e.g. in an ad-hoc network. This may be a scenario in which it may be in particular difficult to calculate the beam direction when transmitting in narrow beam mode.

Both of the first communication device 110 and the second communication device 120 may have multiple antennas in an antenna array, configured for beamforming the respective antenna beam 130, 140. Such antenna typically may have length similar to the wave length of the transmitted signal. In millimetre radio, an appropriate antenna length may be e.g. 1-10 mm, or corresponding with the wave length. Thus also a second communication device 120 of small size may comprise multiple antennas without affecting portability. It may here be mentioned that a bigger number of antennas enable a narrower beam form. Further, both the first communication device 110 and the second communication device 120 may be configured for forming multiple beams in different directions in some embodiments. Such multiple beams may have the same or different beam widths in different embodiments.

In this disclosure, the term "antenna beam" is used interchangeably with the term "antenna pattern". They all refer to the directional (angular) dependence of the strength of the radio wave. Furthermore, the antenna beam or antenna pattern for a second communication device 120, referring to the directional (angular) dependence of the sensitivity of the antenna (or set of multiple antennas), may be similar to, or identical with the beam or antenna pattern when this antenna (or set of multiple antennas) is used for transmission. This is a property of antenna due to assumed reciprocity of uplink and downlink radio transmission. The prior art solutions use measurements of a gyroscope sensor inside the second communication device/ mobile terminal to assist the tuning of the beam direction and the maintenance of the alignment. The change of orientation is measured and this measurement is used to steer the beam to compensate. This may work fine when the change of orientation is made gently in low angular speed. However, when the orientation of the second communication device 120 changes fast, for example the second communication device 120 is turning with high angular speed, the prior art solution might not be able to perform effectively as in this situation. This requires a lot of computations and information exchange which is reducing the capacity of the communication system 100. Thus when the first communication device 110 is involved in this response, the signalling load between the second communication device 120 and the first communication device 110 could be very high, which leads to low efficient usage of the radio resources. Also, the communication link between the first communication device 110 and the second communication device 120 may be lost.

Compared with a radio link having lower frequency, the antenna beams 130, 140 of millimetre wave is usually narrower. When the second communication device 120 is moving and turning, special care must be taken in prior art solutions, to maintain the first communication device beam 140-1 and the second communication device beam 130 aligned for the LOS scenario or to maintain the first communication device beam 140-2 and the second communication device beam 130 to point to the same reflector spot in the NLOS scenario.

At some point, the movements of the second communication device 120 may be so quick that the communication link is lost between first communication device 110 and second communication device 120. It may then be difficult and time consuming to re-establish the connection. This is also most annoying for the user of the second communication device 120.

An objective of some embodiments disclosed herein is to control the beam width of first communication device antenna and second communication device antenna respectively, based on the angular speed and/ or linear speed of the second communication device 120, in order to uphold the communication also when the second communication device 120 is moving fast in angular and/ or linear directions. Another objective is to reduce overhead signalling. Yet another objective is to enable a faster and more robust manner of establishing and uphold a communication link between first communication device 110 and second communication device 120, also in situations where any or both of the first communication device 110 and/ or the second communication device 120 are moving fast.

The angular speed of the second communication device 120 can be derived from the orientation measurements by a sensor associated with the second communication device 120 or situated within the second communication device 120, e.g. comprising a gyroscope sensor. As illustrated in **Figure 1B****,** the second communication device 120 may move linearly along any of the three axis x, y, z in a three-dimensional Cartesian coordinate system, or along any resulting vector thereof. A sensor within the second communication device 120 may detect such linear movements, and may comprise e.g. an accelerometer, a magnetometer and or a Global Positioning System (GPS) receiver within the second communication device 120. Further, the second communication device 120 may move angularly around any of the angular directions ω1, around the ordinate, or y-axis as it also may be called; ω2, around the z-axis, or ω3, around the abscissa, or x-axis as it also may be called. Further, the second communication device 120 may move in a resulting angular vector, resulting from movements along at least two of the angular directions ω1, ω2 and/ or ω3. Such angular movement and orientation of the second communication device 120 may be detected by e.g. a gyroscope sensor.

The angular and/ or linear movements of the second communication device 120 may result from the user of the second communication device 120 turning or moving e.g. turning around when looking for something at the same time as travelling on a train etc. Subsequently, for not unnecessary complicate the language of this disclosure, the expression "angular speed" may be used for denominating a speed in a direction comprising both angular and linear components, if nothing else is mentioned in particular. In some special cases however, some of the angular and/ or linear components may be around zero, or neglectable in comparison with other components of the resulting vector.

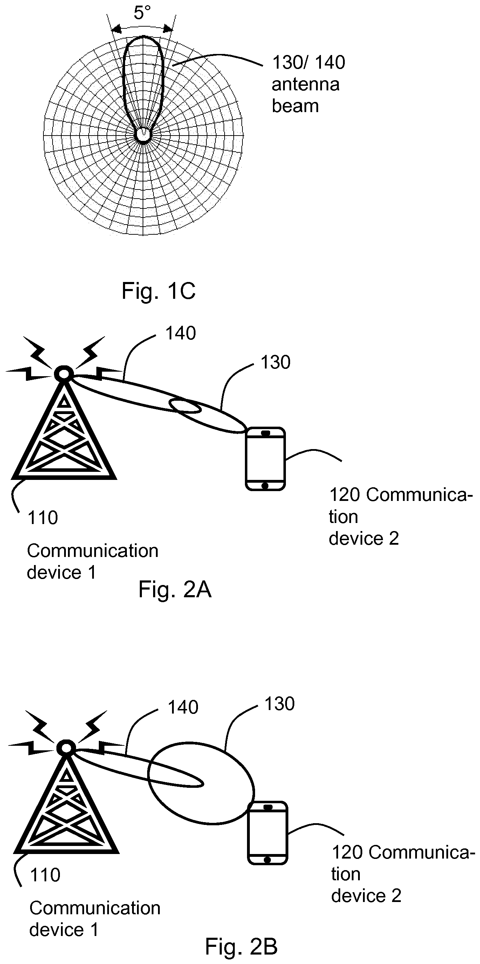

**Figure 1C** illustrates a radio antenna pattern and beam width of an emitted antenna beam. In the illustrated example, the half power beam width is the angle between the half-power (-3 dB) points of the main lobe, when referenced to the peak effective radiated power of the main lobe. The beam width may be expressed in degrees and for the horizontal plane.

In a non limiting example, narrow beam width may be e.g. 0-5 degrees while wide beam width may be e.g. 5-360 degrees in some non-limiting embodiments.

The narrow beam mode may be achieved by beamforming, or spatial filtering as it also may be referred to as. By combining antenna elements in a phased antenna array in such a way that signals at particular angles experience constructive interference while others experience destructive interference the direction of the antenna beam 130, 140, and also the antenna pattern may be modified. Beamforming may be used both for transmission of signals as well as for reception of signals. The improvement compared with omni-directional antenna pattern is sometimes referred to as receive/ transmit gain.

In some embodiments, the beam width of the antenna beam 130/ 140 may be adjusted by changing transmittal band width at the first communication device 110 and the second communication device 120. Thus in some embodiments, high frequency such as e.g. 30-300 GHz may be used in narrow beam width mode and a low frequency such as e.g. 1-10 GHz may be used in wide beam width mode. Further, in some embodiments, the beam shape may be adjusted by a combination of beamforming and frequency adjustment.

The width of the first communication device antenna beam 140 and the second communication device antenna beam 130 may be changed between wide beam and narrow beam whenever the second communication device's angular speed is high or low according to some embodiments. This will be further explained and discussed in conjunction with presentation of **Figures 2A-2D****.** Such adaptation can be multiple-steps when multiple thresholds for the angular speed are used, for example the width of the beams 130, 140 can be very wide, wide and narrow in some embodiments. The herein described solutions might be effective and efficient in a scenario when for example the second communication device 120 is turning or moving very fast, or when the first communication device 110 and the second communication device 120 are turning or moving very fast in relation to each other.

In this disclosure, instead of trying to compensate the second communication device's moving and turning based on the measurement of the terminal orientation, the first communication device 110 is enabled to change the beam shape based on angular speed of the second communication device 120. The angular speed may be calculated as changing rate of terminal antenna direction over time, based on sensor measurements such as e.g. gyroscope measurements. Thus when the second communication device's angular speed is high, i.e. exceeding a threshold limit, the first communication device 110 and/ or the second communication device 120 may change the beam shape into a wider antenna beam shape, possibly an omni-directional antenna pattern. When the second communication device's angular speed is low, i.e. below the threshold limit, the first communication device 110 and/ or the second communication device 120 may utilise a narrower, more directional beam shape.

The first communication device 110 and/ or the second communication device 120 may use narrower beam to make the beam more directional, or the second communication device 120 may use less number of beams to make the combined beam more directional if the second communication device 120 is using multiple groups of antenna elements and each group of antenna elements is forming one beam directed to a respective first communication device 110-1, 110-2. Correspondingly the first communication device 110 and/ or the second communication device 120 may use broader antenna beam or more antenna beams to make the eventual antenna pattern more omni-directional when the threshold limit is exceeded.

In some embodiments, wherein a remote device is involved in this control process, such as e.g. the first communication device 110 and/ or the network control node 170, the second communication device 120 may send out the own angular speed together with a beacon signal to be received by the remote device.

At the network side, the first communication device 110 may change its antenna beam width when it communicates with the second communication device 120, based on the received information concerning angular speed of the second communication device 120. When the second communication device's angular speed is high, e.g. exceeding a threshold limit which may be predetermined, or configurable, the first communication device 110 may use a wider beam to maintain a robust communication radio link with the second communication device 120. When the angular speed of the second communication device 120 is low, such as below the threshold limit, the first communication device 110 may use a narrower beam to achieve higher signal strength which will lead to higher radio link throughput, in some embodiments. This control process by the first communication device 110 may be especially effective in the NLOS scenario.

In the embodiments wherein multiple first communication devices 110-1, 110-2 are communicating simultaneously with one second communication device 120, the number of involving first communication devices 110-1, 110-2 may be changed, based on the angular speed of the second communication device 120. When the second communication device's angular speed is high, exceeding the threshold limit, more first communication devices 110-1, 110-2 may be assigned in the communication with this second communication device 120 to achieve robust communication through diversity combination. When the second communication device's angular speed is low, less access points may be assigned in the communication with this second communication device 120 to achieve optimal utilisation of network resources, in some embodiments.

Such assignments may be done, for example, through the centralised control by the network control node 170 which then may act as a master controller, assigning the appropriate number of involved first communication devices 110-1, 110-2 in the communication with the second communication device 120 based on the second communication device's angular speed. In other embodiments, such assignments may be made through distributed control by a group of coordinated first communication devices 110-1, 110-2 in the wireless communication system 100, as well as through a hybrid control of coordinated first communication devices 110-1, 110-2 which may be supervised by the network control node 170. The difference of above control type embodiments lies on how the control functions may be divided/ allocated among the involved first communication devices 110-1, 110-2 and/ or network control node 170.

**Figure 2A** illustrates a scenario with a first communication device 110 and a second communication device 120, both communicating with each other in a narrow beam mode. Both the antenna beam 130 of the second communication device 120 and the antenna beam 140 of the first communication device 110 are in narrow beam mode. This mode of communication may be used when the second communication device 120 has a low angular speed, i.e. an angular speed lower than a threshold value.

In some embodiments, the second communication device 120 may measure angular movement of a sensor in the second communication device 120, and adjust the direction of the antenna beam 130 to connect with the antenna beam 140 of the first communication device 110. Also, in some embodiments, the second communication device 120 may transmit the measured angular movement to be received by the first communication device 110. The first communication device may then utilise this measurement information from the second communication device 120 for adjusting the direction of the antenna beam 140 to uphold the connection link with the second communication device 120.

**Figure 2B** illustrates a scenario with a first communication device 110 and a second communication device 120, wherein the first communication device 110 is communicating in narrow beam mode, while the second communication device 120 communicates in wide beam mode.

When the second communication device 120 has an angular speed exceeding a threshold limit, the second communication device 120 may switch from narrow beam mode as illustrated in Figure 2A, into wide beam mode.

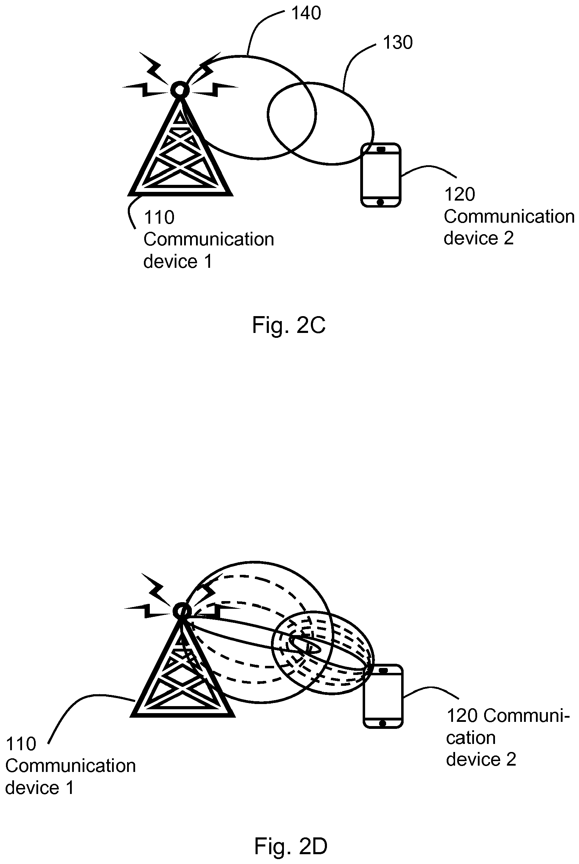

**Figure 2C** illustrates a scenario with a first communication device 110 and a second communication device 120, wherein both the first communication device 110 and the second communication device 120 are communicating in wide beam mode.

When the second communication device 120 has an angular speed exceeding a threshold limit, the second communication device 120 and the first communication device 110 may switch from narrow beam mode as illustrated in Figure 2A, into wide beam mode.

The disclosed angular speed based solution may in some embodiments be implemented in a step-wise manner instead of being implemented in a binary manner as exemplified above. For example, the angular speed of the second communication device 120 may be categorised into "low", "high", and "very high" using, two thresholds limits for dividing the three categories. Then, the corresponding antenna pattern control may be made in three steps in some embodiments, i.e. using "narrow beam" when the angular speed of the second communication device 120 is categorised as "low"; using "wide beam" when the angular speed of the second communication device 120 is categorised as "high", and using "very wide beam" when the angular speed of the second communication device 120 is categorised as "very high".

In other general embodiments, the angular speed of the second communication device 120 may be categorised into n number of different categories, where n is an arbitrary integer exceeding 1, i.e. 1 < *n* < ∞. The n different categories of angular second communication device speed may be divided by *n-1* number of thresholds limits Then, the corresponding antenna pattern control may be made in n steps in some embodiments, where the most narrow antenna beam may be used when the second communication device 120 is categorised into the lowest angular speed category; the most wide antenna beam may be used when the second communication device 120 is categorised into the highest angular speed category; and the remaining antenna beam patterns in between may be used according to the corresponding intermediary angular speed category. This situation is exemplified in different non-limiting examples in **Figure 2D** and in **Table 1,** respectively.

**Table 1**

| **Angular movement threshold limit** | **Beam width mode** |
|---|---|
| < 0.1 rad/s | Narrow (2°) |
| < 0.8 rad/s | Pretty Narrow (5°) |
| < 1.5 rad/s | Wide (15°) |
| < 3 rad/s | Very wide (30°) |
| < 6 rad/s | Omni-directional (360°) |

The above exemplified embodiments of an antenna pattern adjustment based on angular speed of the second communication device 120 may be used, e.g., in combination with the previously described beam direction adjustment, based on the orientation of the second communication device 120. One implementation of such combined embodiments may comprise, for example, when the second communication device's angular speed is low, i.e. below a threshold limit, the second communication device 120 may change the direction of the antenna beam 130 according to the orientation measurements by the (gyroscope) sensor; while the first communication device 110 receives information of the second communication device antenna beam direction from the second communication device 120 and update the antenna beam 140 accordingly in order to follow the second communication device 120 and uphold the connection. However, when the second communication device's angular speed is high, i.e. exceeding the threshold limit, the first communication device 110 and/ or second communication device 120 may increase the beam width of the respective antenna beam 130, 140.

In some embodiments, the beam width may be adjusted by changing operation spectral band for both the first communication device 110 and the second communication device 120. Thus different beam width modes may lead to different spectral bands, or transmission frequencies to be used. A non limiting example of some such transmission frequencies is illustrated in **Table 2.**

**Table 2**

| **Angular movement threshold limit** | **Beam width mode** | **Transmission frequency** |
|---|---|---|
| < 0.1 rad/s | Narrow (2°) | 200 GHz |
| < 0.8 rad/s | Pretty Narrow (5°) | 90 GHz |
| < 1.5 rad/s | Wide (15°) | 30 GHz |
| < 3 rad/s | Very wide (30°) | 8 GHz |
| < 6 rad/s | Omni-directional (360°) | 2 GHz |

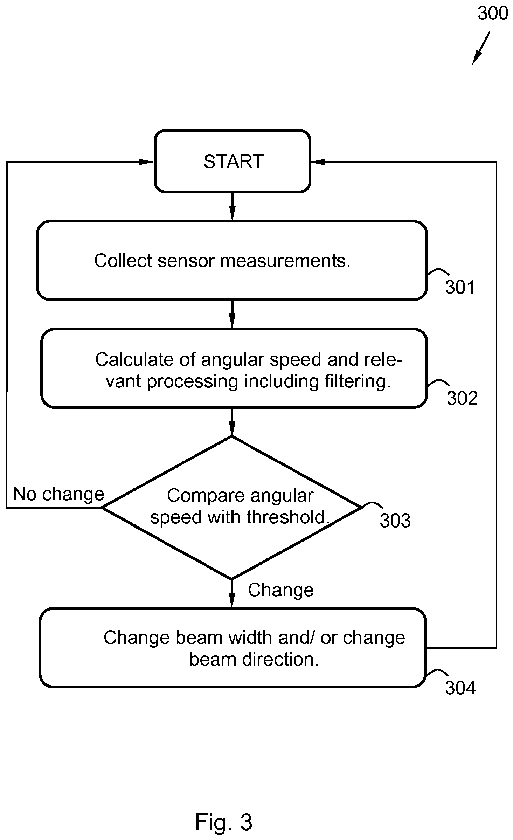

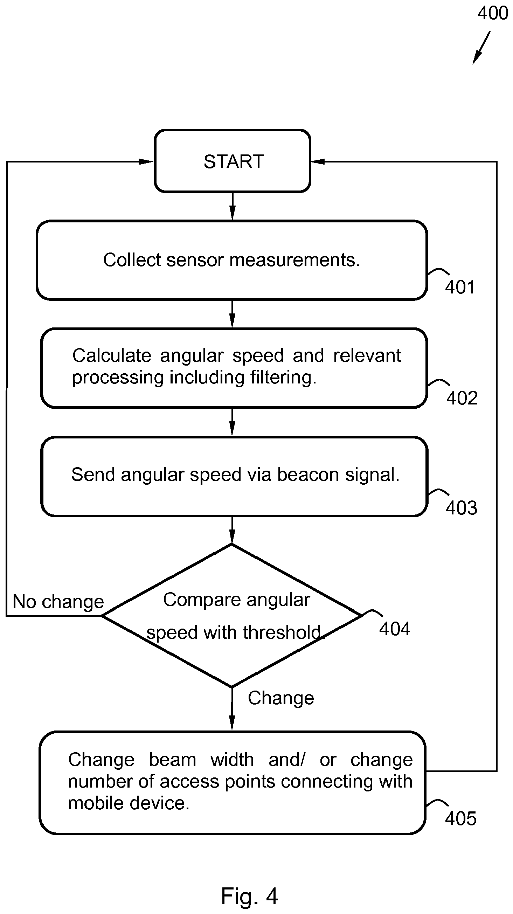

One implementation example is illustrated with a flow chart in **Figure 3****.** Another implementation example involving first communication devices 110-1, 110-2 is illustrated with a flow chart in **Figure 4****.**

**Figure** 3 illustrates an example of a method **300** according to some embodiments, for changing beam width and/ or change beam direction of first communication device and/ or second communication device antenna pattern. Embodiments of the illustrated method 300 may comprise a number of actions **301-304.** However, any, some or all of the described actions 301-304, may be performed in a somewhat different chronological order than the enumeration indicates, be performed simultaneously or even be performed in a completely reversed order according to different alternative embodiments. Further, it is to be noted that some actions may be performed in a plurality of alternative manners according to different embodiments, and that some such alternative manners may be performed only within some, but not necessarily all embodiments. Furthermore, some actions 301-304 may be performed in some alternative embodiments, but not necessarily within all method embodiments described herein. The method 300 may comprise the following actions:

### Action 301

A sensor in the second communication device 120, such as e.g. a gyroscope sensor may measure and determine angular movements of the second communication device 120. Such measurements may be made continuously, or with a predetermined time interval such as e.g. every microsecond, every millisecond, every second, every kilosecond; or any multiple thereof, or in between these enumerated values.

A gyroscope is a device for measuring or maintaining orientation, based on the principles of angular momentum. The gyroscope may be e.g. an electronic, microchip-packaged MEMS (Micro Electro Mechanical Systems) gyroscope device; a vibrating structure gyroscope; a Coriolis Vibratory Gyroscope (CVG); a solid-state ring laser; a fibre optic gyroscope; and/ or the extremely sensitive quantum gyroscope.

Further, the sensor in the second communication device 120 may comprise multiple gyroscopes and accelerometers, or multiple axis gyroscopes and accelerometers to achieve output that has six full degrees of freedom. Such sensor unit may be referred to as an Inertial Measurement Unit (IMU). Thus the sensor may measure movements in any, some or all of the previously mentioned angular directions ω1, ω2 and/ or ω3, or any resulting angular vector thereof. Further, linear movement may be measured in any, some or all of the previously mentioned linear directions x, y and/ or z, or any resulting linear vector thereof, in some embodiments.

### Action 302

Angular speed of the second communication device 120 may be calculated, based on the collected sensor measurements. This action of calculating angular speed may comprise also performing relevant processing including filtering in some embodiments.

The calculation of angular speed may be made by calculating the measured angular movements per time unit. Alternatively, an inverse speed measurement may be used, i.e. by measuring how long angular distance movement the second communication device sensor has measured on a certain time period, such as i.e. a microsecond, a millisecond, a second, a kilosecond; or any multiple thereof, or in between these enumerated values.

Further the calculation of angular speed may be made within the second communication device 120 in some embodiments. In other embodiments, the measurement information of the sensor within the second communication device 120 may be transmitted to the second communication device 110, which will be further discussed in conjunction with **Figure 4****.**

### Action 303

The calculated angular speed of the second communication device 120 may be compared with a threshold limit, or set of threshold limits.

Such threshold value may be predetermined or configurable and may be set to e.g. approximately 0.1 rad/s, 0.5 rad/s, 1 rad/s, 5 rad/s, or to or any multiple thereof, or in between these enumerated values.

When the calculated angular speed is lower than the threshold limit, no change may be made in some embodiments, wherein the second communication device 120 is operating in a narrow beam mode. Alternatively, when the second communication device 120 is operating in wide beam mode, the second communication device 120 may be set to operate in narrow beam mode.

When the calculated angular speed exceeds the threshold limit, the second communication device 120 may be set to wide beam mode.

The comparison of action 303 may be made in a processor within the second communication device 120 in some embodiments. Further, in some embodiments, the comparison action 303 may be made both in the second communication device 120 and in the first communication device 110 in parallel and possibly independent of each other in some embodiments. Thus different threshold limits, or sets of threshold limits, may be used in the second communication device 120 and in the first communication device 110 respectively.

### Action 304

The beam width and/ or beam direction of the second communication device 120 may be changed, based on the previously made comparison 303 between the calculated angular speed of the second communication device 120, and the threshold limit.

**Figure 4** illustrates an example of a method **400** according to some embodiments, for changing beam width and/ or change beam direction of the first communication device 110. Embodiments of the illustrated method 400 may comprise a number of actions **401-405.** However, any, some or all of the described actions 401-405, may be performed in a somewhat different chronological order than the enumeration indicates, be performed simultaneously or even be performed in a completely reversed order according to different alternative embodiments. Further, it is to be noted that some actions may be performed in a plurality of alternative manners according to different embodiments, and that some such alternative manners may be performed only within some, but not necessarily all embodiments. Furthermore, some actions 401-405 may be performed in some alternative embodiments, but not necessarily within all method embodiments described herein. The method 400 may comprise the following actions:

### Action 401

A sensor in the second communication device 120, such as e.g. a gyroscope sensor may measure and determine angular movements of the second communication device 120. Such measurements may be made continuously, or with a predetermined time interval such as e.g. every microsecond, every millisecond, every second, every kilosecond; or any multiple thereof, or in between these enumerated values.

### Action 402

Angular speed of the second communication device 120 may be calculated, based on the collected sensor measurements. This action of calculating angular speed may comprise also performing relevant processing including filtering in some embodiments.

Further the calculation of angular speed may be made within the second communication device 120 in some embodiments. In other embodiments, the measurement information of the sensor within the second communication device 120 may be transmitted to the first communication device 110. Thus, in some such alternative embodiments, the calculation of angular speed may be made within the first communication device 110, based on the sensor measurements.

### Action 403

Transmission is made of the calculated angular speed of the second communication device 120. The transmission of the information is made in order to be received by the first communication device 110, or plurality of first communication devices 110-1, 110-2. The transmission may be made via a beacon signal, according to some embodiments.

### Action 404

The angular speed of the second communication device 120 may be compared with a threshold limit, or set of threshold limits.

Such threshold value may be predetermined or configurable and may be set to e.g. approximately 0.1 rad/s, 0.5 rad/s, 1 rad/s, 5 rad/s, or to or any multiple thereof, or in between these enumerated values.

When the calculated angular speed is lower than the threshold limit, no change may be made in some embodiments, wherein the first communication device 110 is operating in a narrow beam mode. Alternatively, when the first communication device 110 is operating in wide beam mode, the first communication device 110 may be set to operate in narrow beam mode.

When the calculated angular speed exceeds the threshold limit, the first communication device 110 may be set to wide beam mode.

The comparison of action 404 may be made in a processor within the first communication device 110 in some embodiments. Further, in some embodiments, the comparison between angular speed and threshold limit may be made both in the second communication device 120 and in the first communication device 110 in parallel and possibly independent of each other in some embodiments. Thus different threshold limits, or sets of threshold limits, may be used in the second communication device 120 and in the first communication device 110 respectively.

### Action 405

The beam width and/ or beam direction of the first communication device 110 may be changed, based on the previously made comparison 404 between the calculated angular speed of the second communication device 120, and the threshold limit.

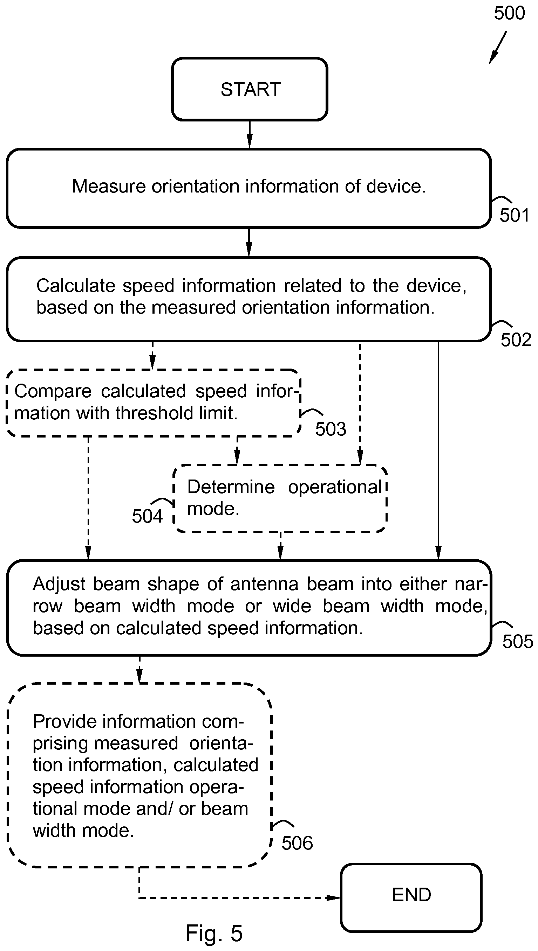

**Figure 5** is a flow chart illustrating embodiments of a method 500 in a second communication device 120, for adjusting beam shape of a second communication device antenna beam 130 in a radio link between a first communication device 110 and the second communication device 120. The beam shape of the second communication device antenna beam 130 is adjustable into a narrow beam width mode and a wide beam width mode. In some embodiments, the beam shape of the second communication device antenna beam 130 may be adjustable into various antenna patterns in between the narrow beam width mode and the wide beam width mode. The wide beam width mode may in some embodiments be omni-directional.

The beam shape of the second communication device antenna beam 130 may in some embodiments be adjustable by beamforming the second communication device antenna beam 130 through phase control of signals at an antenna of the second communication device 120. Further in some embodiments, the second communication device antenna beam 130 may be adjustable by changing operation spectral band for both the first communication device 110 and the second communication device 120. In such embodiments, high frequency such as e.g. 30-300 GHz, or any frequency in between may be used in narrow beam width mode and a low frequency such as e.g. 1-10 GHz or any frequency in between may be used in wide beam width mode. Further, in some embodiments, the beam shape may be adjusted by a combination of beamforming and frequency adjustment.

The second communication device 120 may be represented by a mobile terminal and the first communication device 110 may be represented by a network node, or vice versa, in different embodiments.

However, in some embodiments, both the first communication device 110 and the second communication device 120 may be represented by radio network nodes forming a backhaul link. Thanks to embodiments herein, tuning and adjustment of the respective network nodes may be simplified, and the communication link may be upheld, also when the respective radio network nodes, or one of them, are moving due to e.g. windy conditions, earth quake, land slide or similar phenomenon.

Also, one or both of the first communication device 110 and/ or the second communication device 120 may be mobile, e.g. a mobile relay node or micro node on the roof of a bus, forming a backhaul link with a macro node.

Further, both the first communication device 110 and the second communication device 120 may be represented by mobile terminals in an ad-hoc network communication solution. As it is in particular difficult to uphold the communication link in a scenario when both parts are moving in an unpredictable way, solutions disclosed herein may be of particular advantage for such solutions.

To appropriately adjust the beam shape of the second communication device antenna beam 130, the method 500 may comprise a number of actions **501-506.**

It is however to be noted that any, some or all of the described actions 501-506, may be performed in a somewhat different chronological order than the enumeration indicates, be performed simultaneously or even be performed in a completely reversed order according to different embodiments. Some actions may be performed within some alternative embodiments such as e.g. actions 503, 504 and/ or 506. Further, it is to be noted that some actions may be performed in a plurality of alternative manners according to different embodiments, and that some such alternative manners may be performed only within some, but not necessarily all embodiments. The method 500 may comprise the following actions:

### Action 501

Orientation information of the second communication device 120 is measured. The measurement may be made by a sensor in the second communication device 120, such as a gyroscope sensor, an accelerometer, a GPS receiver, or similar sensor unit in some embodiments.

Such measurements may be made continuously, or with a predetermined time interval such as e.g. every microsecond, every millisecond, every second, every kilosecond; or any multiple thereof, or in between these enumerated values.

Further, the second communication device 120 may comprise a plurality of sensors, e.g. of the above enumerated types, and the measurement may be made by all, or a subset of all the above enumerated plurality of sensors.

An advantage with having a plurality of sensors within the second communication device 120 may be that more reliable measurements of the orientation of the second communication device 120 may be measured and determined.

### Action 502

Speed information related to the second communication device 120 is calculated, based on the measured 501 orientation information.

The calculated speed information may comprise: angular speed of the second communication device 120 and/ or linear speed of the second communication device 120.

This action of calculating angular speed may comprise also performing relevant processing including filtering in some embodiments.

The calculation of angular speed may be made by calculating the measured angular movements per time unit. Alternatively, an inverse speed measurement may be used, i.e. by measuring how long angular distance movement the second communication device sensor has measured on a certain time period, such as i.e. a microsecond, a millisecond, a second, a kilosecond; or any multiple thereof, or in between these enumerated values.

### Action 503

This action may be performed within some, but not all embodiments.

The calculated 502 speed information is compared with a threshold limit.

Such threshold value may be predetermined or configurable and may be set to e.g. approximately 0.1 rad/s, 0.5 rad/s, 1 rad/s, 5 rad/s, or to or any multiple thereof, or in between these enumerated values.

In some embodiments, the calculated 502 speed information may be compared with a plurality of threshold limits. The comparison may be made in a processor within the second communication device 120 in some embodiments.

### Action 504

This action may be performed within some, but not all embodiments.

Operational mode of the second communication device 120, such as e.g. off, sleep, idle and/ or active mode may be determined.

### Action 505

The beam shape of the second communication device antenna beam 130 is adjusted into any of the narrow beam width mode or the wide beam width mode, based on the calculated 502 speed information and/ or the comparison 503 of the calculated 502 speed information with the threshold limit.

In some embodiments, the second communication device antenna beam 130 may be adjusted into the narrow beam width mode when the calculated 502 speed information is below the threshold limit and adjusted into the wide beam width mode when the speed information exceeds the threshold limit according to some embodiments.

The beam shape of the second communication device antenna beam 130 may be adjustable by beamforming the second communication device antenna beam 130 through phase control of signals at an antenna 65) of the second communication device 120 in some embodiments. In some embodiments, the beam shape of the second communication device antenna beam 130 may be adjustable by changing operation spectral band for both the first communication device 110 and the second communication device 120, wherein a high frequency is used in narrow beam width mode and a low frequency is used in wide beam width mode. High frequency may be e.g. 50 GHz, 60 GHz, 80GHz or similar while low frequency may be e.g. 2 GHz, 5 GHz, 8 GHz or similar, to just mention some non limiting examples.

The adjustment of the second communication device antenna beam shape may be based on the determined 504 operational mode of the second communication device 120, in some embodiments. Furthermore, the second communication device antenna beam 130 may be adjusted into the wide beam width mode when the determined 504 operational mode of the second communication device 120 is IDLE.

In some embodiments, the transmission power of the second communication device antenna beam 130 may be increased when it is adjusted into the wide beam width mode. Such adjustment may comprise an increase of transmission power.

Furthermore, in some embodiments, spectral band width assigned to the second communication device may be decreased when the second communication device antenna beam 130 is adjusted from the narrow beam width mode into the wide beam width mode. Thereby, interference may be avoided or at least reduced. Thus, in some embodiments, band width in narrow beam mode may be e.g. 100 MHz. When changing into wide beam mode, the band width may be reduced to e.g. 50 MHz. This is merely an illustrative and non-limiting example.

In some embodiments, the adjustment may comprise adjusting the direction of the second communication device antenna beam 130 based on the measured 501 orientation information.

### Action 506

This action may be performed within some, but not all embodiments.

Information comprising e.g. the measured 501 orientation information, the calculated 502 speed information, the determined 504 operational mode of the second communication device 120, beam width mode of the second communication device 120, an indication of second communication device antenna beam mode change and/ or operation spectral band change, to the first communication device 110.

Thus, in some embodiments, when the second communication device antenna beam 130 has been adjusted 505 from one mode to another mode, the information to be provided to the first communication device 110 may comprise information for informing the first communication device 110 of the second communication device antenna beam mode change.

Such information transmission may be made continuously, or with a predetermined time interval such as e.g. every microsecond, every millisecond, every second, every kilosecond; or any multiple thereof, or in between these enumerated values. Alternatively, the information transmission may be event driven, i.e. information concerning change of antenna beam shape may be transmitted when it occurs in some embodiments.

Thereby, the first communication device 110 is enabled to accordingly change antenna beam mode at the same time (plus a minor delay due to transmission time and internal computational lagging) as the second communication device 120, without making any further calculations. Thus calculation resource of the first communication device 110 and time may be saved when switching from narrow beam mode into wide beam mode, which may lead to reduced risk of losing the communication link, without additional cost in terms of calculation efforts.

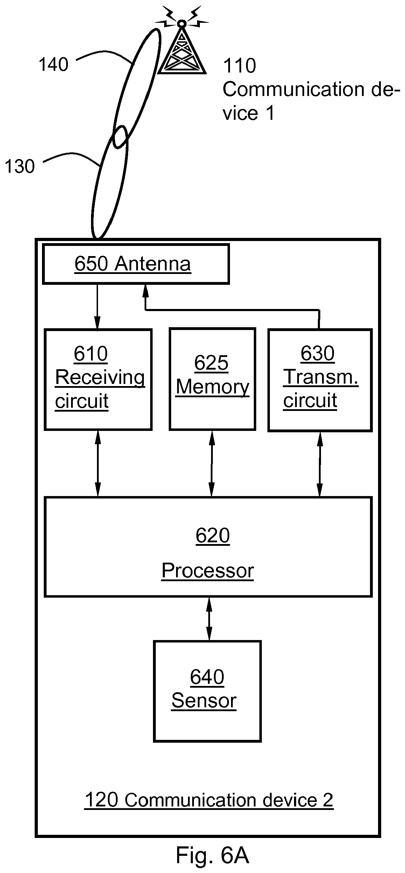

**Figure 6A** illustrates an embodiment of a second communication device 120 comprised in a wireless communication system 100. The second communication device 120 is configured for performing at least some of the previously described method actions 501-506, for adjusting beam shape of a second communication device antenna beam 130 in a radio link between a first communication device 110 and the second communication device 120. The beam shape is adjustable into a narrow beam width mode and a wide beam width mode. In some embodiments, the beam shape is adjustable into a plurality of beam width modes, having different beam widths.

The second communication device 120 comprises a sensor **640,** configured for measuring orientation information of the second communication device 120. The sensor 640 may comprise e.g. a gyroscope sensor, an accelerometer, a magnetometer or similar sensor type.

Further, the sensor 640 in the second communication device 120 may comprise a set of multiple sensors 640, such as multiple gyroscopes and/ or accelerometers, or multiple axis gyroscopes and accelerometers to achieve output that has six full degrees of freedom. Such sensor may be referred to as an Inertial Measurement Unit (IMU). Thus the sensor 640 may measure movements in any, some or all of the previously mentioned angular directions ω1, ω2 and/ or ω3, or any resulting angular vector thereof. Further, linear movement may be measured in any, some or all of the previously mentioned linear directions x, y and/ or z, or any resulting linear vector thereof, in some embodiments.

In some embodiments, the sensor 640 such as e.g. the accelerometer and/ or magnetometer may sense the acceleration of the second communication device 120 as well as the strength of the magnetic field at the location where the second communication device 120 is. The sensor 640 may further comprise a GPS receiver in the second communication device 120 which can help to determine the location.

The radio network node 110 further comprises a processor **620,** configured for calculating speed information related to the second communication device 120, based on the measured orientation information, measured by the sensor 640. Further, the processor 620 is also configured for adjusting beam shape of the second communication device antenna beam 130 into any of the narrow beam width mode or the wide beam width mode, based on the calculated speed information.

The processor 620 may be further configured for adjusting the beam shape of the second communication device antenna beam 130 by beamforming the second communication device antenna beam 130 through phase control of signals at an antenna 650 of the second communication device 120. Also, or in combination therewith, the beam shape may be adjusted by changing operation spectral band for both the first communication device 110 and the second communication device 120, wherein a high frequency is used in narrow beam width mode and a low frequency is used in wide beam width mode.

In some alternative embodiments, the processor 620 may be configured for comparing the calculated speed information with a threshold limit; and in addition configured for adjusting the second communication device antenna beam 130 into the narrow beam width mode when the calculated speed information is below the threshold limit and adjusted into the wide beam width mode when the speed information exceeds the threshold limit.

The calculated speed information may comprise angular speed of the second communication device 120 and/ or linear speed of the second communication device 120.

The processor 620 may further be configured for determining operational mode of the second communication device 120, and also configured for adjusting the second communication device antenna beam shape, based on the determined operational mode, in some embodiments. Thus the processor 620 may adjust the second communication device antenna beam 130 into the wide beam width mode when the determined operational mode is IDLE.

Also, in some embodiments, the processor 620 may also be configured for increasing transmission power of the second communication device antenna beam 130 when it is adjusted into the wide beam width mode.

In further addition, the processor 620 may be configured for providing information comprising the measured orientation information, the calculated speed information, the determined operational mode of the second communication device 120 and/ or an indication of receiver antenna beam mode change, to the first communication device 110. Also, in some embodiments, the processor 620 may be configured for adjusting the second communication device antenna beam 130 from one mode to another mode and in connection therewith inform the first communication device 110 of the second communication device antenna beam mode change. Such provision of information may be provided by the processor 620 via a transmitting circuit **630.**

The processor 620 may be configured for adjusting the direction of the second communication device antenna beam 130 based on the measured orientation information when the second communication device antenna beam 130 is in the narrow beam width mode and/ or the wide beam width mode.

In some embodiments, the processor 620 may be configured for assisting changing operation spectral band and/ or for assisting changing spectral bandwidth when the second communication device antenna beam 130 is adjusted from the narrow beam width mode into the wide beam width mode.

Such processor 620 may comprise one or more instances of a processing circuit, i.e. a Central Processing Unit (CPU), a processing unit, a processing circuit, a processor, an Application Specific Integrated Circuit (ASIC), a microprocessor, or other processing logic that may interpret and execute instructions. The herein utilised expression "processor" may thus represent a processing circuitry comprising a plurality of processing circuits, such as, e.g., any, some or all of the ones enumerated above.

Also, the second communication device 120 may also comprise a receiving circuit **610,** configured for receiving information from the first communication device 110 or from any other device configured for wireless communication over a wireless interface according to some embodiments.

In addition according to some embodiments, the second communication device 120, in some embodiments, may also comprise at least one memory **625** in the second communication device 120. The optional memory 625 may comprise a physical device utilised to store data or programs, i.e., sequences of instructions, on a temporary or permanent basis in a non-transitory manner. According to some embodiments, the memory 625 may comprise integrated circuits comprising silicon-based transistors. Further, the memory 625 may be volatile or non-volatile.

Furthermore, the second communication device 120 may also comprise an antenna **650.** The antenna 650 may comprise an antenna array, comprising an array of antenna elements, configured for beamforming of an antenna beam 130.

The actions 501-506 to be performed in the second communication device 120 may be implemented through the one or more processors 620 in the second communication device 120 together with computer program product for performing the functions of the actions 501-506.

Thus a non-transitory computer program comprising program code for performing the method 500 according to any of actions 501-506, for adjusting beam shape of a second communication device antenna beam 130 in a radio link between a first communication device 110 and the second communication device 120, wherein the beam shape is adjustable into a narrow beam width mode and a wide beam width mode, when the computer program is loaded into a processor 620 of the second communication device 120.

The non-transitory computer program product may comprise a computer readable storage medium storing program code thereon for adjusting beam shape of a second communication device antenna beam 130 in a radio link between a first communication device 110 and the second communication device 120. The beam shape is adjustable into a narrow beam width mode and a wide beam width mode. The program code comprises instructions for executing a method 500, comprising measuring 501 orientation information of the second communication device 120. Also, the method 500 also comprises calculating 502 speed information related to the second communication device 120, based on the measured 501 orientation information. Furthermore, the method in addition comprises adjusting 505 beam shape of the second communication device antenna beam 130 into any of the narrow beam width mode or the wide beam width mode, based on the calculated 502 speed information.

The non-transitory computer program product mentioned above may be provided for instance in the form of a non-transitory data carrier carrying computer program code for performing at least some of the actions 501-506 according to some embodiments when being loaded into the processor 620. The data carrier may be, e.g., a hard disk, a CD ROM disc, a memory stick, an optical storage device, a magnetic storage device or any other appropriate medium such as a disk or tape that may hold machine readable data in a non transitory manner. The non-transitory computer program product may furthermore be provided as computer program code on a server and downloaded to the second communication device 120, e.g., over an Internet or an intranet connection.

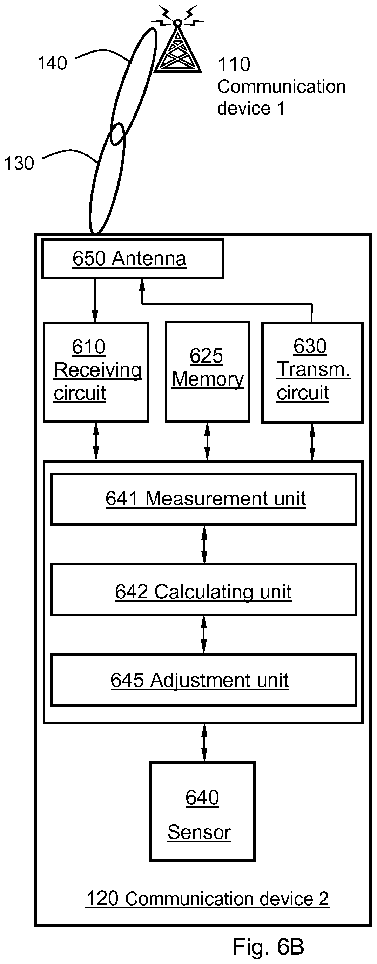

**Figure 6B** illustrates an embodiment of a second communication device 120 comprised in a wireless communication system 100. The second communication device 120 is configured for performing at least some of the previously described method actions 501-506, for adjusting beam shape of a second communication device antenna beam 130 in a radio link between a first communication device 110 and the second communication device 120. The illustrated second communication device 120 is similar to the embodiment depicted in Figure 6A, and comprises receiving circuit 610, memory 625, transmission circuit 630, sensor 640 and antenna 650 identical with, or corresponding to, the same-numbered units illustrated in the second communication device embodiment depicted in Figure 6A.

However, the illustrated embodiment of the second communication device 120 may comprise a measurement unit **641.** The measurement unit 641 may be configured for measuring orientation information of the second communication device 120. Further, the second communication device 120 may also comprise a calculating unit **642.** The calculating unit 642 is further configured for calculating speed information related to the second communication device 120, based on the measured orientation information. Also, the second communication device 120 may comprise an adjustment unit **645.** The adjustment unit 645 may be configured for adjusting beam shape of the second communication device antenna beam 130 into any of the narrow beam width mode or the wide beam width mode, based on the calculated speed information.

In some further alternative embodiments, the second communication device 120 may also comprise a comparison unit, configured for comparing the calculated speed information with a threshold limit, or a plurality of threshold limits.

Also, in some embodiments, the second communication device 120 may comprise a determining unit. The determining unit may be configured for determining operational mode of the second communication device 120.

Furthermore, the second communication device 120 may additionally comprise a providing unit. The providing unit may be configured for providing information comprising the measured orientation information, the calculated speed information and/ or the determined operational mode of the second communication device 120, to the first communication device 110. The provision of information to the first communication device 110 may be made in conjunction with the transmitting circuit 630.

The second communication device 120, as the first communication device 110, can use the same antenna beam mode for transmission and reception; hence the methods for changing antenna beam mode apply both in case of transmission and reception, respectively.

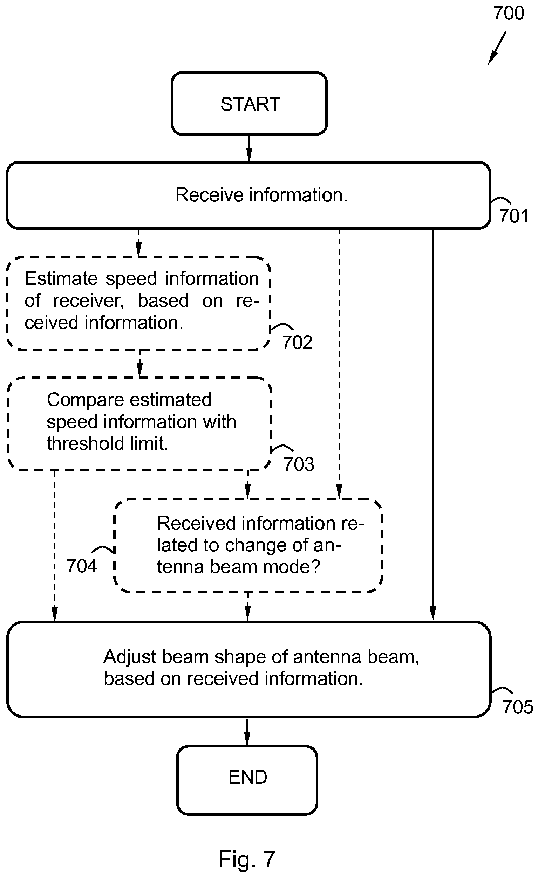

**Figure 7** is a flow chart illustrating embodiments of a method **700** in a first communication device 110 in a wireless communication system 100. The method 700 aims at adjusting a beam shape of a first communication device antenna beam 140 in a radio link between the first communication device 110 and a second communication device 120. The beam shape is adjustable into a narrow beam width mode and a wide beam width mode. In some embodiments, the beam shape may be adjustable into a plurality of beam width modes.

The beam shape of the first communication device antenna beam 140 may be adjustable by beamforming the first communication device antenna beam 140 through phase control of signals at an antenna of the first communication device 110 and/ or by changing operation spectral band for both the first communication device 110 and the second communication device 120, wherein a high frequency is used in narrow beam width mode and a low frequency is used in wide beam width mode. High frequency may be e.g. 30-300 GHz; low frequency may be e.g. 1-30 GHz in some embodiments.

The second communication device 120 may be represented by a mobile terminal and the first communication device 110 may be represented by a network node, or vice versa, in different embodiments.

However, in some embodiments, both the first communication device 110 and the second communication device 120 may be represented by network nodes forming a backhaul link. Thanks to embodiments herein, tuning and adjustment of the respective network nodes may be simplified, and the communication link may be upheld, also when the respective network nodes, or one of them, are moving due to e.g. windy conditions, earth quake, land slide or similar phenomenon.

Also, one or both of the first communication device 110 and/ or the second communication device 120 may be mobile, e.g. a mobile micro node on the roof of a bus, forming a backhaul link with a macro node.

Further, both the first communication device 110 and the second communication device 120 may be represented by mobile terminals in an ad-hoc network communication solution. As it is in particular difficult to uphold the communication link in a scenario when both parts are moving in an unpredictable way, solutions disclosed herein may be of particular advantage for such solutions.

To appropriately adjust the beam shape of the first communication device antenna beam 140, the method 700 may comprise a number of actions **701-705.**

It is however to be noted that any, some or all of the described actions 701-705, may be performed in a somewhat different chronological order than the enumeration indicates, be performed simultaneously or even be performed in a completely reversed order according to different embodiments. Some actions may be performed within some alternative embodiments such as e.g. actions 702, 703 and/ or 704. Further, it is to be noted that some actions may be performed in a plurality of alternative manners according to different embodiments, and that some such alternative manners may be performed only within some, but not necessarily all embodiments. The method 700 may comprise the following actions:

### Action 701

Information is received from the second communication device 120. The received information may comprise e.g. orientation information measured on the second communication device 120; speed information of the second communication device 120 and/ or operational mode of the second communication device 120.

The speed information of the second communication device 120 may comprise e.g. angular speed of the second communication device 120 and/ or linear speed of the second communication device 120.

The received information may comprise an indication of operational mode of the second communication device 120 in some embodiments. In some embodiments, the received information may comprise an indication of an antenna beam mode change at the second communication device 120 and/ or operation spectral band change at the second communication device 120.

Furthermore, the direction of the first communication device antenna beam 140 may be adjusted based on the received 701 information from the second communication device 120 when the first communication device antenna beam 140 is in the narrow beam width mode or in the wide beam width mode.

Additionally, in embodiments wherein the second communication device 120 is configured for communicating with a plurality of first communication devices 110 and wherein the number of first communication devices 110 communicating with the second communication device 120 may be determined based on the information received 701 from the second communication device 120.

The number of first communication devices 110 for communicating with the second communication device 120 may in some such embodiments, be determined in proportionality with the estimated speed information of the second communication device 120 such that more first communication devices 110 are communicated with the second communication device 120 when a high speed information of the second communication device 120 is estimated than when a low speed information is estimated.

### Action 702

This action may be performed within some, but not all embodiments.

Speed information of the second communication device 120 may be estimated, based on the received 701 information. Such speed information may comprise angular speed of the second communication device 120 and/ or linear speed of the second communication device 120.

The estimation of angular speed of the second communication device 120 may be made by calculating the measured angular movements per time unit. Alternatively, an inverse speed measurement may be used, i.e. by measuring how long angular distance movement the second communication device sensor has measured on a certain time period, such as i.e. a microsecond, a millisecond, a second, a kilosecond; or any multiple thereof, or in between these enumerated values.

### Action 703

This action may be performed within some, but not all embodiments, wherein speed information of the second communication device 120 has been estimated 702.

The estimated 702 speed information of the second communication device 120 may be compared with a threshold limit.

Such threshold value may be predetermined or configurable and may be set to e.g. approximately 0.1 rad/s, 0.5 rad/s, 1 rad/s, 5 rad/s, or to or any multiple thereof, or in between these enumerated values.

In some embodiments, the calculated speed information may be compared with a plurality of threshold limits.

### Action 704

This action may be performed within some, but not all embodiments.

Information may be received from the second communication device 120, related to a change of second communication device antenna beam mode. This received information from the second communication device 120 may induce the first communication device 110 to change antenna beam mode according to the antenna beam mode of the second communication device 120. Thus the antenna beam mode of the first communication device 110 may be adjusted without calculation in the first communication device 110. Thereby a faster mode adaptation to the angular speed of the second communication device 120 is achieved.

### Action 705

The beam shape of the first communication device antenna beam 140 is adjusted into any of the narrow beam width mode or the wide beam width mode, based on the received 701 information.

The first communication device antenna beam 140 may be adjusted into the narrow beam width mode when the estimated 702 speed information may be below the threshold limit and adjusted into the wide beam width mode when the speed information exceeds the threshold limit.

The adjustment of the first communication device antenna beam shape may be based on the operational mode of the second communication device 120.

Furthermore, in some embodiments, the first communication device antenna beam 140 may be adjusted into the wide beam width mode when the operational mode of the second communication device 120 is IDLE.

Furthermore, the transmission power of the first communication device antenna beam 140 may be increased according to some embodiments, when the beam shape of the first communication device antenna beam 140 is adjusted into the wide beam width mode.

The adjustment of the beam shape of the first communication device antenna beam 140 may be made in order to correspond to the second communication device antenna beam mode.

The operation spectral band may be changed to another operation spectral band for both the first communication device 110 and/ or the second communication device 120 in some embodiments, when the first communication device antenna beam 140 is adjusted from the narrow beam width mode into the wide beam width mode. Thus the operation spectral band may be changed, in a non limiting example, from e.g. 5 mm wavelength to 50 mm wavelength.

Further, according to some embodiments, the second communication device 120 may be assigned a decreased spectral band width when the first communication device antenna beam 140 is adjusted from the narrow beam width mode into the wide beam width mode.

Also, in some embodiments, information concerning a first communication device antenna beam mode change may be transmitted to the second communication device 120 when the first communication device antenna beam 140 has been adjusted from one mode to another mode. Similarly, in some embodiments, information concerning a second communication device 120 antenna beam mode change may be transmitted to the first communication device 110. In some embodiments, the second communication device 120 may send request for changing antenna beam mode to the first communication device 110 and the second communication device 120 may execute the antenna beam mode change after receiving approval information from the first communication device 110.

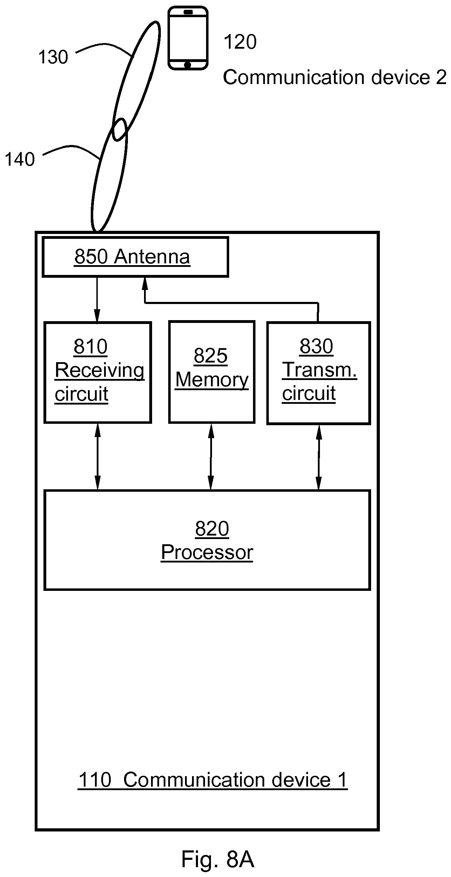

**Figure 8A** illustrates an embodiment of first communication device 110 comprised in a wireless communication system 100. The first communication device 110 is configured for performing at least some of the previously described method actions 701-705, for adjusting a beam shape of a first communication device antenna beam 140 in a radio link between the first communication device 110 and a second communication device 120. The beam shape is adjustable into a narrow beam width mode and a wide beam width mode.

For enhanced clarity, any internal electronics or other components of the first communication device 110, not completely indispensable for understanding the herein described embodiments have been omitted from Figure 8A.

The first communication device 110 comprises a processor **820,** configured for obtaining information from the second communication device 120, possibly via a receiving circuit **810.** Further, the processor 820 is configured for adjusting beam shape of the first communication device antenna beam 140 into any of the narrow beam width mode or the wide beam width mode, based on the received information. In some embodiments, the processor 820 is configured for adjusting beam shape into a plurality of different modes.

The received information may comprise orientation information measured on the second communication device 120, speed information of the second communication device 120 and/ or operational mode of the second communication device 120.

The processor 820 may in addition be configured for estimating speed information of the second communication device 120, based on the received information. Further, the processor 820 may be configured for comparing the estimated speed information with a threshold limit. Also the processor 820 may be configured for adjusting the first communication device antenna beam 140 into the narrow beam width mode when the estimated speed information is below the threshold limit and adjusted into the wide beam width mode when the speed information exceeds the threshold limit. The speed information of the second communication device 120 may comprise e.g., angular speed of the second communication device 120 and/ or linear speed of the second communication device 120.

Further, the processor 820 may be configured for adjusting the beam shape of the first communication device antenna beam 140 by beamforming the first communication device antenna beam 140 through phase control of signals at an antenna **850** of the first communication device 110 and/ or by changing operation spectral band for both the first communication device 110 and the second communication device 120, wherein a high frequency is used in narrow beam width mode and a low frequency is used in wide beam width mode.

Further, the processor 820 may be configured for obtaining information concerning the operational mode of the second communication device 120, and also configured for adjusting the first communication device antenna beam shape based on the operational mode of the second communication device 120. In some embodiments, the processor 820 may be configured for adjusting the first communication device antenna beam 140 into the wide beam width mode when the operational mode of the second communication device 120 is IDLE.

In addition, the processor 820 may be further configured for increasing the transmission power of the first communication device antenna beam 140 when the beam shape of the first communication device antenna beam 140 is adjusted into the wide beam width mode in some embodiments.

The processor 820 may also be configured for obtaining information concerning a change of antenna beam mode of the second communication device 120. Also, the processor 820 may also be configured for adjusting the beam shape of the first communication device antenna beam 140 in order to correspond to the second communication device antenna beam mode. Thus, by changing antenna beam mode of the first communication device 110 simultaneously with changing antenna beam mode of the second communication device 120, time and computation resource at the first communication device side is saved.

The processor 820 may also be further configured for adjusting the direction of the first communication device antenna beam 140 based on the obtained information from the second communication device 120 when the first communication device antenna beam 140 is in narrow beam width mode, or in the wide beam width mode, according to some embodiments.

Additionally, the processor 820 may also be further configured for changing the operation spectral band to another operation spectral band for both the first communication device 110 and the second communication device 120 when the first communication device antenna beam 140 is adjusted from the narrow beam width mode into the wide beam width mode.

The processor 820 may also be further configured for assigning a decreased spectral band width to the second communication device 120 when the first communication device antenna beam 140 is adjusted from the narrow beam width mode into the wide beam width mode.

Additionally, the processor 820 may also be further configured for providing information concerning mode change of the first communication device antenna beam 140, to be received by the second communication device 120.

In some alternative embodiments, wherein the second communication device 120 is configured for communicating with a plurality of first communication devices 110, the processor 820 may also be configured for determining the number of first communication devices 110 to communicate with the second communication device 120 based on the information obtained from the second communication device 120. The number of first communication devices 110 for communicating with the second communication device 120 may be determined by the processor 820, in proportionality with the estimated speed information of the second communication device 120 such that more first communication devices 110 may communicate with the second communication device 120 when a high speed information of the second communication device 120 is estimated, than when a low speed information is estimated.

Such processor 820 may comprise one or more instances of a processing circuit, i.e., a Central Processing Unit (CPU), a processing unit, a processing circuit, a processor, an Application Specific Integrated Circuit (ASIC), a microprocessor, or other processing logic that may interpret and execute instructions. The herein utilised expression "processor" may thus represent a processing circuitry comprising a plurality of processing circuits, such as, e.g., any, some or all of the ones enumerated above.

The first communication device 110 may comprise a receiving circuit **810,** configured for receiving signals from the second communication device 120 via an antenna **850.** The received signals from the second communication device 120 may then be provided to the processor 820 e.g. via a bus. The antenna 850 may comprise an antenna array, comprising an array of antenna elements, configured for beamforming of an antenna beam 140.

Further, the first communication device 110 may also comprise a transmitting circuit **830,** configured for transmitting information via the antenna 850, to be received by the second communication device 120 according to some embodiments.

The first communication device 110, as well as the second communication device 120 may use the same antenna beam mode for both transmission and reception; hence the methods for changing antenna beam mode apply both in case of transmission and reception, respectively.

In addition, the first communication device 110 in some embodiments may also comprise at least one memory **825** in the first communication device 110. The optional memory 825 may comprise a physical device utilised to store data or programs, i.e., sequences of instructions, on a temporary or permanent basis in a non-transitory manner. According to some embodiments, the memory 825 may comprise integrated circuits comprising silicon-based transistors. Further, the memory 825 may be volatile or non-volatile.

The actions 701-705 to be performed in the first communication device 110 may be implemented through the one or more processors 820 in the first communication device 110 together with computer program product for performing the functions of the actions 701-705.

Thus a non-transitory computer program comprising program code for performing the method 700 according to any of actions 701-705, for adjusting beam shape of a first communication device antenna beam 140 in a radio link between a first communication device 110 and a second communication device 120, wherein the beam shape is adjustable into a narrow beam width mode and a wide beam width mode, when the computer program is loaded into a processor 820 of the first communication device 110.

The non-transitory computer program product may comprise a computer readable storage medium storing program code thereon for adjusting beam shape of a first communication device antenna beam 140 in a radio link between the first communication device 110 and a second communication device 120. The beam shape is adjustable into a narrow beam width mode and a wide beam width mode. The program code comprises instructions for executing a method 700, comprising receiving 701 information from the second communication device 120 and adjusting 705 beam shape of the first communication device antenna beam 140 into any of the narrow beam width mode or the wide beam width mode, based on the received 701 information.

The non-transitory computer program product mentioned above may be provided for instance in the form of a non-transitory data carrier carrying computer program code for performing at least some of the actions 701-705 according to some embodiments when being loaded into the processor 820. The data carrier may be, e.g., a hard disk, a CD ROM disc, a memory stick, an optical storage device, a magnetic storage device or any other appropriate medium such as a disk or tape that may hold machine readable data in a non-transitory manner. The non-transitory computer program product may furthermore be provided as computer program code on a server and downloaded to the first communication device 110, e.g., over an Internet or an intranet connection.

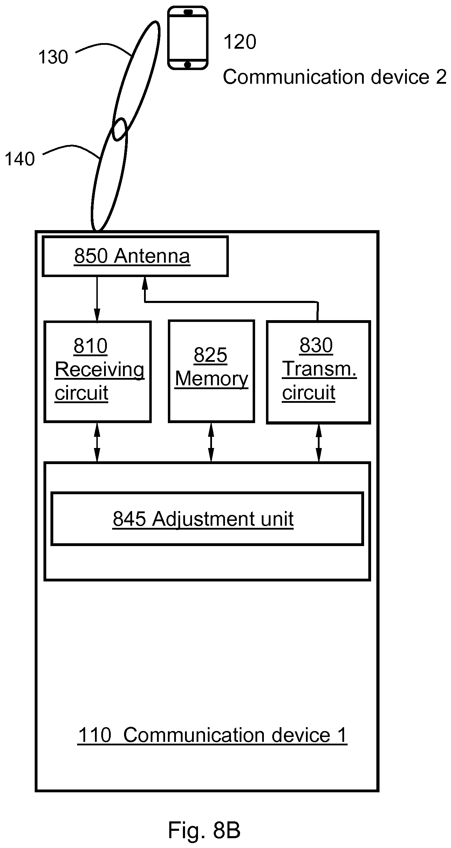

**Figure 8B** illustrates an embodiment of a first communication device 110 comprised in a wireless communication system 100. The first communication device 110 is configured for performing at least some of the previously described method actions 701-705, for adjusting beam shape of a first communication device antenna beam 140 in a radio link between the first communication device 110 and a second communication device 120. The illustrated first communication device 110 is similar to the embodiment depicted in Figure 6B, and may comprise a receiving circuit 810, memory 825, transmission circuit 830 and an antenna 850 identical with, or corresponding to, the same-numbered units illustrated in the second communication device embodiment depicted in Figure 8A.

However, the illustrated embodiment of the first communication device 110 may comprise an adjustment unit **845.** The adjustment unit 845 may be configured for adjusting beam shape of the first communication device antenna beam 140 into any of the narrow beam width mode or the wide beam width mode, based on the received information. The first communication device antenna beam 140 may be adjusted into the narrow beam width mode when the estimated speed information is below the threshold limit and adjusted into the wide beam width mode when the speed information exceeds the threshold limit, in some embodiments.

Further, the first communication device 110 may also comprise an estimating unit **842,** configured for estimating speed information of the second communication device 120, based on received information from the second communication device 120.

The first communication device 110 may also comprise a comparison unit **843** in some embodiments. Such comparison unit 843 may be configured for comparing the estimated speed information with a threshold limit.

The terminology used in the description of the embodiments as illustrated in the accompanying drawings is not intended to be limiting of the described methods 500, 700; first communication device 110 and/ or second communication device 120. Various changes, substitutions and/ or alterations may be made, without departing from the solution embodiments as defined by the appended claims.

As used herein, the term "and/ or" comprises any and all combinations of one or more of the associated listed items. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as e.g. a processor 620, 820 may fulfil the functions of several items recited in the claims. The mere fact that certain measures are recited in mutually different dependent claims does not indicate that a combination of these measures cannot be used to advantage. A computer program may be stored/ distributed on a suitable non-transitory medium, such as an optical storage medium or a solid-state medium supplied together with or as part of other hardware, but may also be distributed in other forms such as via Internet or other wired or wireless communication system.

## Claims

1. A method (500) in a second communication device (120), for adjusting beam shape of a second communication device antenna beam (130) in a radio link between a first communication device (110) and the second communication device (120), said beam shape being adjustable into a narrow beam width mode and a wide beam width mode, the method (500) comprising:
measuring (501) orientation information of the second communication device (120);
calculating (502) speed information related to the second communication device (120), based on the measured (501) orientation information; and
adjusting (505) beam shape of the second communication device antenna beam (130) into any of the narrow beam width mode, or the wide beam width mode, based on the calculated (502) speed information;
wherein the calculated (502) speed information comprises: angular speed of the second communication device (120) and linear speed of the second communication device (120); and
wherein, the method further comprises:
determining (504) operational mode of the second communication device (120), and wherein the adjustment (505) of the second communication device antenna beam shape is based on the determined (504) operational mode.

2. The method (500) according to claim 1, wherein the beam shape of the second communication device antenna beam (130) is adjustable by beamforming the second communication device antenna beam (130) through phase control of signals at an antenna (650) of the second communication device (120) and/ or by changing operation spectral band for both the first communication device (110) and the second communication device (120), wherein a high frequency is used in narrow beam width mode and a low frequency is used in wide beam width mode.

3. The method (500) according to any of claim 1 or claim 2, wherein the method (500) further comprises:
comparing (503) the calculated (502) speed information with a threshold limit; and wherein the second communication device antenna beam (130) is adjusted (505) into the narrow beam width mode when the calculated (502) speed information is below the threshold limit and adjusted (505) into the wide beam width mode when the speed information exceeds the threshold limit.

4. The method (500) according to claim 1, wherein the second communication device antenna beam (130) is adjusted (505) into the wide beam width mode when the determined (504) operational mode is IDLE.

5. The method (500) according to any of claims 1-4, further comprising increasing transmission power of the second communication device antenna beam (130) when it is adjusted (505) into the wide beam width mode.

6. The method (500) according to any of claims 1-5, further comprising, when the second communication device antenna beam (130) is adjusted (505) from one antenna beam mode to another antenna beam mode, informing the first communication device (110) of the second communication device antenna beam mode change.

7. The method (500) according to any of claims 1-6, further comprising:
providing (506) information comprising the measured (501) orientation information, the calculated (502) speed information, the determined (504) operational mode of the second communication device (120), an indication of second communication device antenna beam mode change and/ or operation spectral band change, to the first communication device (110).

8. The method (500) according to any of claims 1-7, wherein the direction of the second communication device antenna beam (130) is adjusted based on the measured (501) orientation information.

9. The method (500) according to any of claims 1-8, wherein the operation spectral band for both the first communication device (110) and the second communication device (120) is changed to another operation spectral band when the beam shape mode of the second communication device antenna beam (130) is adjusted (505).

10. The method (500) according to any of claims 1-9, wherein the antenna beam (130) of the second communication device (120) is adjustable into a plurality of beam width modes, each associated with a second communication device speed threshold limit interval between an upper threshold limit and a lower threshold limit.

11. The method (500) according to any of claims 1-10, wherein the second communication device (120) is represented by a mobile terminal and the first communication device (110) is represented by a network node.

12. A second communication device (120), for adjusting beam shape of a second communication device antenna beam (130) in a radio link between a first communication device (110) and the second communication device (120), said beam shape being adjustable into a narrow beam width mode and a wide beam width mode, the second communication device (120) comprising:
a sensor (640), configured for measuring orientation information of the second communication device (120); and
a processor (620), configured for calculating speed information related to the second communication device (120), based on the measured orientation information, and also configured for adjusting beam shape of the second communication device antenna beam (130) into any of the narrow beam width mode or the wide beam width mode, based on the calculated speed information;
wherein the calculated speed information comprises: angular speed of the second communication device (120) and linear speed of the second communication device (120);
wherein, the processor (620) is further configured for:
determining (504) operational mode of the second communication device (120), and wherein the adjustment (505) of the second communication device antenna beam shape is based on the determined (504) operational mode.

13. The second communication device (120) according to claim 12, wherein the processor (620) is further configured for adjusting the beam shape of the second communication device antenna beam (130) by beamforming the second communication device antenna beam (130) through phase control of signals at an antenna (650) of the second communication device (120) and/ or by changing operation spectral band for both the first communication device (110) and the second communication device (120), wherein a high frequency is used in narrow beam width mode and a low frequency is used in wide beam width mode.

14. The second communication device (120) according to any of claim 12 or claim 13, wherein the processor (620) is further configured for implementing the method (500) according to any of claims 2-11.

15. A computer program comprising program code for performing a method (500) according to any of claims 1-11, for adjusting beam shape of a second communication device antenna beam (130) in a radio link between a first communication device (110) and the second communication device (120), said beam shape being adjustable into a narrow beam width mode and a wide beam width mode.

16. A computer program product comprising a computer readable storage medium storing program code thereon for adjusting beam shape of a second communication device antenna beam (130) in a radio link between a first communication device (110) and the second communication device (120), said beam shape being adjustable into a narrow beam width mode and a wide beam width mode, wherein the program code comprising instructions for executing a method (500) comprising:
measuring (501) orientation information of the second communication device (120);
calculating (502) speed information related to the second communication device (120), based on the measured (501) orientation information; and
adjusting (505) beam shape of the second communication device antenna beam (130) into any of the narrow beam width mode or the wide beam width mode, based on the calculated (502) speed information;
wherein the calculated (502) speed information comprises: angular speed of the second communication device (120) and linear speed of the second communication device (120);
wherein, the method further comprises:
determining (504) operational mode of the second communication device (120), and wherein the adjustment (505) of the second communication device antenna beam shape is based on the determined (504) operational mode.

17. A method (700) in a first communication device (110), for adjusting a beam shape of a first communication device antenna beam (140) in a radio link between the first communication device (110) and a second communication device (120), said beam shape being adjustable into a narrow beam width mode and a wide beam width mode, the method (700) comprising:
receiving (701) information from the second communication device (120); and
adjusting (705) beam shape of the first communication device antenna beam (140) into any of the narrow beam width mode or the wide beam width mode, based on the received (701) information;
wherein the received (701) information comprises: orientation information measured on the second communication device (120), and speed information of the second communication device (120), ;
wherein said speed information of the second communication device (120) comprises: angular speed of the second communication device (120) and linear speed of the second communication device (120); and
wherein the received (701) information comprises operational mode of the second communication device (120), and wherein the adjustment (705) of the first communication device antenna beam shape is based on the operational mode of the second communication device (120).

18. The method (700) according to claim 17, wherein the beam shape of the first communication device antenna beam (140) is adjustable by beamforming the first communication device antenna beam (140) through phase control of signals at an antenna (850) of the first communication device (110) and/ or by changing operation spectral band for both the first communication device (110) and the second communication device (120), wherein a high frequency is used in narrow beam width mode and a low frequency is used in wide beam width mode.

19. The method (700) according to claim 17 or 18, further comprising:
estimating (702) speed information of the second communication device (120), based on the received (701) information; and
comparing (703) the estimated (702) speed information with a threshold limit; and wherein the first communication device antenna beam (140) is adjusted (705) into the narrow beam width mode when the estimated (702) speed information is below the threshold limit and adjusted (705) into the wide beam width mode when the speed information exceeds the threshold limit.

20. The method (700) according to any of claims 17-19, wherein the first communication device antenna beam (140) is adjusted (705) into the wide beam width mode when the operational mode of the second communication device (120) is IDLE.

21. The method (700) according to any of claims 17-20, wherein the transmission power of the first communication device antenna beam (140) is increased when the beam shape of the first communication device antenna beam (140) is adjusted (705) into the wide beam width mode.

22. The method (700) according to any of claims 17-21, further comprising:
receiving (704) information related to a change of second communication device antenna beam mode, and wherein the adjustment (705) of the beam shape of the first communication device antenna beam (140) is made in order to correspond to the antenna beam mode of the second communication device (120).

23. The method (700) according to any of claims 17-22, wherein the direction of the first communication device antenna beam (140) is adjusted based on the received (701) information from the second communication device (120).

24. The method (700) according to any of claims 17-23, wherein the operation spectral band for both the first communication device (110) and the second communication device (120) is changed to another operation spectral band when the beam shape mode of the first communication device antenna beam (140) is adjusted (705).

25. The method (700) according to any of claims 17-24, further comprising assigning a decreased spectral band width to the second communication device (120) when the first communication device antenna beam (140) is adjusted (705) from the narrow beam width mode into the wide beam width mode.

26. The method (700) according to any of claims 17-25, further comprising, when the first communication device antenna beam (140) is adjusted (705) from one mode to another mode, informing the second communication device (120) of the first communication device antenna beam mode change.

27. The method (700) according to any of claims 17-26, wherein the second communication device (120) is configured for communicating with a plurality of first communication devices (110) and wherein the method further comprises determining the number of first communication devices (110) communicating with the second communication device (120), based on the information received (701) from the second communication device (120).

28. The method (700) according to claim 27, wherein the number of first communication devices (110) for communicating with the second communication device (120) is determined in proportionality with the estimated (702) speed information of the second communication device (120) such that more first communication devices (110) are enabled to communicate with the second communication device (120) when a high speed information of the second communication device (120) is estimated (702) than when a low speed information is estimated (702).

29. The method (700) according to any of claims 17-28, wherein the antenna beam (140) of the first communication device (110) is adjustable into a plurality of beam width modes, each associated with a first communication device speed threshold limit interval between an upper threshold limit and a lower threshold limit.

30. A first communication device (110), for adjusting a beam shape of a first communication device antenna beam (140) in a radio link between the first communication device (110) and a second communication device (120), said beam shape being adjustable into a narrow beam width mode and a wide beam width mode, the first communication device (110) comprising:
a processor (820), configured for obtaining information from the second communication device (120); and also configured for adjusting beam shape of the first communication device antenna beam (140) into any of the narrow beam width mode or the wide beam width mode, based on the received information;
wherein the received (701) information comprises: orientation information measured on the second communication device (120), and speed information of the second communication device (120);
wherein said speed information of the second communication device (120) comprises: angular speed of the second communication device (120) and linear speed of the second communication device (120);
wherein the received (701) information comprises operational mode of the second communication device (120), and wherein the adjustment (705) of the first communication device antenna beam shape is based on the operational mode of the second communication device (120).

31. The first communication device (110) according to claim 30, wherein the processor (820) is further configured for implementing the method (700) according to any of claims 17-29.

32. A computer program comprising program code for performing a method (700) according to any of claims 17-29, for adjusting a beam shape of a first communication device antenna beam (140) in a radio link between a first communication device (110) and a second communication device (120), said beam shape being adjustable into a narrow beam width mode and a wide beam width mode.

33. A computer program product comprising a computer readable storage medium storing program code thereon for adjusting beam shape of a first communication device antenna beam (140) in a radio link between a first communication device (110) and a second communication device (120), said beam shape being adjustable into a narrow beam width mode and a wide beam width mode, wherein the program code comprising instructions for executing a method (700) comprising:
receiving (701) information from the second communication device (120); and
adjusting (705) beam shape of the first communication device antenna beam (140) into any of the narrow beam width mode or the wide beam width mode, based on the received (701) information;
wherein the received (701) information comprises: orientation information measured on the second communication device (120) and speed information of the second communication device (120);
wherein said speed information of the second communication device (120) comprises: angular speed of the second communication device (120) and linear speed of the second communication device (120);
wherein the received (701) information comprises operational mode of the second communication device (120), and wherein the adjustment (705) of the first communication device antenna beam shape is based on the operational mode of the second communication device (120).

## Patentansprüche

1. Verfahren (500) in einer zweiten Kommunikationseinrichtung (120) zum Einstellen der Strahlform eines Antennenstrahls (130) der zweiten Kommunikationseinrichtung in einer Funkverbindung zwischen einer ersten Kommunikationseinrichtung (110) und der zweiten Kommunikationseinrichtung (120), wobei die Strahlform in einen engen Öffnungswinkelmodus und einen weiten Öffnungswinkelmodus einstellbar ist und das Verfahren (500) Folgendes umfasst:
Messen (501) von Orientierungsinformationen der zweiten Kommunikationseinrichtung (120);
Berechnen (502) von Geschwindigkeitsinformationen, die mit der zweiten Kommunikationseinrichtung (120) in Beziehung stehen, auf der Grundlage der gemessenen (501) Orientierungsinformationen; und
Einstellen (505) einer Strahlform des Antennenstrahls (130) der zweiten Kommunikationseinrichtung in den engen Öffnungswinkelmodus oder den weiten Öffnungswinkelmodus auf der Grundlage der berechneten (502) Geschwindigkeitsinformationen; wobei
die berechneten (502) Geschwindigkeitsinformationen Folgendes umfassen: eine Winkelgeschwindigkeit der zweiten Kommunikationseinrichtung (120) und eine Lineargeschwindigkeit der zweiten Kommunikationseinrichtung (120); und
das Verfahren ferner Folgendes umfasst:
Bestimmen (504) eines Betriebsmodus der zweiten Kommunikationseinrichtung (120), wobei das Einstellen (505) der Strahlform des Antennenstrahls der zweiten Kommunikationseinrichtung auf der Grundlage des bestimmten (504) Betriebsmodus erfolgt.

2. Verfahren (500) nach Anspruch 1, wobei die Strahlform des Antennenstrahls (130) der zweiten Kommunikationseinrichtung durch Strahlformung des Antennenstrahls (130) der zweiten Kommunikationseinrichtung über eine Phasensteuerung von Signalen bei einer Antenne (650) der zweiten Kommunikationseinrichtung (120) und/oder durch Ändern eines Betriebsspektralbands für sowohl die erste Kommunikationseinrichtung (110) als auch die zweite Kommunikationseinrichtung (120) einstellbar ist, wobei im engen Öffnungswinkelmodus eine Hochfrequenz verwendet wird und im weiten Öffnungswinkelmodus eine Niederfrequenz verwendet wird.

3. Verfahren (500) nach Anspruch 1 oder Anspruch 2, wobei das Verfahren (500) ferner Folgendes umfasst:
Vergleichen (503) der berechneten (502) Geschwindigkeitsinformationen mit einem Schwellenwert; wobei der Antennenstrahl (130) der zweiten Kommunikationseinrichtung in den engen Öffnungswinkelmodus eingestellt (505) wird, wenn die berechneten (502) Geschwindigkeitsinformationen unter dem Schwellenwert liegen, und in den weiten Öffnungswinkelmodus eingestellt (505) wird, wenn die Geschwindigkeitsinformationen den Schwellenwert überschreiten.

4. Verfahren (500) nach Anspruch 1, wobei der Antennenstrahl (130) der zweiten Kommunikationseinrichtung in den weiten Öffnungswinkelmodus eingestellt (505) wird, wenn der bestimmte (504) Betriebsmodus IDLE ist.

5. Verfahren (500) nach einem der Ansprüche 1-4, das ferner ein Erhöhen der Sendeleistung des Antennenstrahls (130) der zweiten Kommunikationseinrichtung umfasst, wenn er in den weiten Öffnungswinkelmodus eingestellt (505) wird.

6. Verfahren (500) nach einem der Ansprüche 1-5, das ferner dann, wenn der Antennenstrahl (130) der zweiten Kommunikationseinrichtung von einem Antennenstrahlmodus zu einem weiteren Antennenstrahlmodus eingestellt (505) wird, ein Benachrichtigen der ersten Kommunikationseinrichtung (110) über die Änderung des Antennenstrahlmodus der zweiten Kommunikationseinrichtung umfasst.

7. Verfahren (500) nach einem der Ansprüche 1-6, das ferner Folgendes umfasst:
Bereitstellen (506) von Informationen, die die gemessenen (501) Orientierungsinformationen, die berechneten (502) Geschwindigkeitsinformationen, den bestimmten (504) Betriebsmodus der zweiten Kommunikationseinrichtung (120) und eine Anzeige einer Änderung des Antennenstrahlmodus der zweiten Kommunikationseinrichtung und/oder einer Betriebsspektralbandänderung zur ersten Kommunikationseinrichtung (110) umfassen.

8. Verfahren (500) nach einem der Ansprüche 1-7, wobei die Richtung des Antennenstrahls (130) der zweiten Kommunikationseinrichtung auf der Grundlage der gemessenen (501) Orientierungsinformationen eingestellt wird.

9. Verfahren (500) nach einem der Ansprüche 1-8, wobei das Betriebsspektralband für sowohl die erste Kommunikationseinrichtung (110) als auch die zweite Kommunikationseinrichtung (120) zu einem weiteren Betriebsspektralband geändert wird, wenn der Strahlformmodus des Antennenstrahls (130) der zweiten Kommunikationseinrichtung eingestellt (505) wird.

10. Verfahren (500) nach einem der Ansprüche 1-9, wobei der Antennenstrahl (130) der zweiten Kommunikationseinrichtung (120) in mehrere Öffnungswinkelmodi, die jeweils einem Schwellenwertintervall der Geschwindigkeit der zweiten Kommunikationseinrichtung zwischen einem oberen Schwellenwertgrenzwert und einem unteren Schwellenwertgrenzwert zugeordnet sind, einstellbar ist.

11. Verfahren (500) nach einem der Ansprüche 1-10, wobei die zweite Kommunikationseinrichtung (120) durch ein mobiles Endgerät repräsentiert wird und die erste Kommunikationseinrichtung (110) durch einen Netzknoten repräsentiert wird.

12. Zweite Kommunikationseinrichtung (120) zum Einstellen der Strahlform eines Antennenstrahls (130) der zweiten Kommunikationseinrichtung in einer Funkverbindung zwischen einer ersten Kommunikationseinrichtung (110) und der zweiten Kommunikationseinrichtung (120), wobei die Strahlform in einen engen Öffnungswinkelmodus und einen weiten Öffnungswinkelmodus einstellbar ist und die zweite Kommunikationseinrichtung (120) Folgendes umfasst:
einen Sensor (640), der konfiguriert ist zum Messen von Orientierungsinformationen der zweiten Kommunikationseinrichtung (120); und
einen Prozessor (620), der konfiguriert ist zum Berechnen von Geschwindigkeitsinformationen, die mit der zweiten Kommunikationseinrichtung (120) in Beziehung stehen, auf der Grundlage der gemessenen Orientierungsinformationen und außerdem konfiguriert ist zum Einstellen einer Strahlform des Antennenstrahls (130) der zweiten Kommunikationseinrichtung in den engen Öffnungswinkelmodus oder den weiten Öffnungswinkelmodus auf der Grundlage der berechneten Geschwindigkeitsinformationen; wobei die berechneten Geschwindigkeitsinformationen Folgendes umfassen: eine Winkelgeschwindigkeit der zweiten Kommunikationseinrichtung (120) und eine Lineargeschwindigkeit der zweiten Kommunikationseinrichtung (120); und
der Prozessor (620) ferner konfiguriert ist zum
Bestimmen (504) eines Betriebsmodus der zweiten Kommunikationseinrichtung (120), wobei das Einstellen (505) der Strahlform des Antennenstrahls der zweiten Kommunikationseinrichtung auf der Grundlage des bestimmten (504) Betriebsmodus erfolgt.

13. Zweite Kommunikationseinrichtung (120) nach Anspruch 12, wobei der Prozessor (620) ferner konfiguriert ist, die Strahlform des Antennenstrahls (130) der zweiten Kommunikationseinrichtung durch Strahlformung des Antennenstrahls (130) der zweiten Kommunikationseinrichtung über eine Phasensteuerung von Signalen bei einer Antenne (650) der zweiten Kommunikationseinrichtung (120) und/oder durch Ändern eines Betriebsspektralbands für sowohl die erste Kommunikationseinrichtung (110) als auch die zweite Kommunikationseinrichtung (120) einzustellen, wobei im engen Öffnungswinkelmodus eine Hochfrequenz verwendet wird und im weiten Öffnungswinkelmodus eine Niederfrequenz verwendet wird.

14. Zweite Kommunikationseinrichtung (120) nach Anspruch 12 oder Anspruch 13, wobei der Prozessor (620) ferner konfiguriert ist, das Verfahren (500) nach einem der Ansprüche 2-11 zu implementieren.

15. Computerprogramm, das Programmcode zum Durchführen eines Verfahrens (500) nach einem der Ansprüche 1-11 zum Einstellen der Strahlform eines Antennenstrahls (130) der zweiten Kommunikationseinrichtung in einer Funkverbindung zwischen einer ersten Kommunikationseinrichtung (110) und der zweiten Kommunikationseinrichtung (120) umfasst, wobei die Strahlform in einen engen Öffnungswinkelmodus und einen weiten Öffnungswinkelmodus einstellbar ist.

16. Computerprogrammprodukt, das ein computerlesbares Speichermedium umfasst, in dem Programmcode zum Einstellen der Strahlform eines Antennenstrahls (130) der zweiten Kommunikationseinrichtung in einer Funkverbindung zwischen einer ersten Kommunikationseinrichtung (110) und der zweiten Kommunikationseinrichtung (120) gespeichert ist, wobei die Strahlform in einen engen Öffnungswinkelmodus und einen weiten Öffnungswinkelmodus einstellbar ist und der Programmcode Anweisungen zum Ausführen eines Verfahrens (500) umfasst, das Folgendes umfasst:
Messen (501) von Orientierungsinformationen der zweiten Kommunikationseinrichtung (120);
Berechnen (502) von Geschwindigkeitsinformationen, die mit der zweiten Kommunikationseinrichtung (120) in Beziehung stehen, auf der Grundlage der gemessenen (501) Orientierungsinformationen; und
Einstellen (505) einer Strahlform des Antennenstrahls (130) der zweiten Kommunikationseinrichtung in den engen Öffnungswinkelmodus oder den weiten Öffnungswinkelmodus auf der Grundlage der berechneten (502) Geschwindigkeitsinformationen; wobei
die berechneten (502) Geschwindigkeitsinformationen Folgendes umfassen: eine Winkelgeschwindigkeit der zweiten Kommunikationseinrichtung (120) und eine Lineargeschwindigkeit der zweiten Kommunikationseinrichtung (120); und
das Verfahren ferner Folgendes umfasst:
Bestimmen (504) eines Betriebsmodus der zweiten Kommunikationseinrichtung (120), wobei das Einstellen (505) der Strahlform des Antennenstrahls der zweiten Kommunikationseinrichtung auf der Grundlage des bestimmten (504) Betriebsmodus erfolgt.

17. Verfahren (700) in einer ersten Kommunikationseinrichtung (110) zum Einstellen einer Strahlform eines Antennenstrahls (140) der ersten Kommunikationseinrichtung in einer Funkverbindung zwischen der ersten Kommunikationseinrichtung (110) und einer zweiten Kommunikationseinrichtung (120), wobei die Strahlform in einen engen Öffnungswinkelmodus und einen weiten Öffnungswinkelmodus einstellbar ist und das Verfahren (700) Folgendes umfasst:
Empfangen (701) von Informationen von der zweiten Kommunikationseinrichtung (120); und
Einstellen (705) einer Strahlform eines Antennenstrahls (140) der ersten Kommunikationseinrichtung in den engen Öffnungswinkelmodus oder den weiten Öffnungswinkelmodus auf der Grundlage der empfangenen (701) Informationen; wobei
die empfangenen (701) Informationen Folgendes umfassen:
Orientierungsinformationen, die an der zweiten Kommunikationseinrichtung (120) gemessen wurden, und Geschwindigkeitsinformationen der zweiten Kommunikationseinrichtung (120);
die Geschwindigkeitsinformationen der zweiten Kommunikationseinrichtung (120) Folgendes umfassen: eine Winkelgeschwindigkeit der zweiten Kommunikationseinrichtung (120) und eine Lineargeschwindigkeit der zweiten Kommunikationseinrichtung (120); und
die empfangenen (701) Informationen einen Betriebsmodus der zweiten Kommunikationseinrichtung (120) umfassen, wobei das Einstellen (705) der Strahlform des Antennenstrahls der ersten Kommunikationseinrichtung auf der Grundlage des bestimmten Betriebsmodus der zweiten Kommunikationseinrichtung (120) erfolgt.

18. Verfahren (700) nach Anspruch 17, wobei die Strahlform des Antennenstrahls (140) der ersten Kommunikationseinrichtung durch Strahlformung des Antennenstrahls (140) der ersten Kommunikationseinrichtung über eine Phasensteuerung von Signalen bei einer Antenne (850) der ersten Kommunikationseinrichtung (110) und/oder durch Ändern eines Betriebsspektralbands für sowohl die erste Kommunikationseinrichtung (110) als auch die zweite Kommunikationseinrichtung (120) einstellbar ist, wobei im engen Öffnungswinkelmodus eine Hochfrequenz verwendet wird und im weiten Öffnungswinkelmodus eine Niederfrequenz verwendet wird.

19. Verfahren (700) nach Anspruch 17 oder 18, das ferner Folgendes umfasst:
Schätzen (702) von Geschwindigkeitsinformationen der zweiten Kommunikationseinrichtung (120) auf der Grundlage der empfangenen (701) Informationen und
Vergleichen (703) der geschätzten (702) Geschwindigkeitsinformationen mit einem Schwellenwert; wobei der Antennenstrahl (140) der ersten Kommunikationseinrichtung in den engen Öffnungswinkelmodus eingestellt (705) wird, wenn die geschätzten (702) Geschwindigkeitsinformationen unter dem Schwellenwert liegen, und in den weiten Öffnungswinkelmodus eingestellt (705) wird, wenn die Geschwindigkeitsinformationen den Schwellenwert überschreiten.

20. Verfahren (700) nach einem der Ansprüche 17-19, wobei der Antennenstrahl (140) der ersten Kommunikationseinrichtung in den weiten Öffnungswinkelmodus eingestellt (705) wird, wenn der Betriebsmodus der zweiten Kommunikationseinrichtung (120) IDLE ist.

21. Verfahren (700) nach einem der Ansprüche 17-20, wobei die Sendeleistung des Antennenstrahls (140) der ersten Kommunikationseinrichtung erhöht wird, wenn die Strahlform des Antennenstrahls (140) der ersten Kommunikationseinrichtung in den weiten Öffnungswinkelmodus eingestellt (705) wird.

22. Verfahren (700) nach einem der Ansprüche 17-21, das ferner Folgendes umfasst:
Empfangen (704) von Informationen, die mit einer Änderung des Antennenstrahlmodus der zweiten Kommunikationseinrichtung in Beziehung stehen, wobei das Einstellen (705) des Antennenstrahls (140) der ersten Kommunikationseinrichtung vorgenommen wird, um dem Antennenstrahlmodus der zweiten Kommunikationseinrichtung (120) zu entsprechen.

23. Verfahren (700) nach einem der Ansprüche 17-22, wobei die Richtung des Antennenstrahls (140) der ersten Kommunikationseinrichtung auf der Grundlage der von der zweiten Kommunikationseinrichtung (120) empfangenen (701) Informationen eingestellt wird.

24. Verfahren (700) nach einem der Ansprüche 17-23, wobei das Betriebsspektralband für sowohl die erste Kommunikationseinrichtung (110) als auch die zweite Kommunikationseinrichtung (120) zu einem weiteren Betriebsspektralband geändert wird, wenn der Strahlformmodus des Antennenstrahls (140) der ersten Kommunikationseinrichtung eingestellt (705) wird.

25. Verfahren (700) nach einem der Ansprüche 17-24, das ferner ein Zuweisen einer verringerten Spektralbandbreite zur zweiten Kommunikationseinrichtung (120) umfasst, wenn der Antennenstrahl (140) der ersten Kommunikationseinrichtung vom engen Öffnungswinkelmodus in den weiten Öffnungswinkelmodus eingestellt (705) wird.

26. Verfahren (700) nach einem der Ansprüche 17-25, das ferner dann, wenn der Antennenstrahl (140) der ersten Kommunikationseinrichtung von einem Antennenstrahlmodus zu einem weiteren Antennenstrahlmodus eingestellt (705) wird, ein Benachrichtigen der zweiten Kommunikationseinrichtung (120) über die Änderung des Antennenstrahlmodus der ersten Kommunikationseinrichtung umfasst.

27. Verfahren (700) nach einem der Ansprüche 17-26, wobei die zweite Kommunikationseinrichtung (120) konfiguriert ist, mit mehreren ersten Kommunikationseinrichtungen (110) zu kommunizieren, und das Verfahren ferner ein Bestimmen der Anzahl erster Kommunikationseinrichtungen (110), die mit der zweiten Kommunikationseinrichtung (120) kommunizieren, auf der Grundlage der Informationen, die von der zweiten Kommunikationseinrichtung (120) empfangen (701) wurden, umfasst.

28. Verfahren (700) nach Anspruch 27, wobei die Anzahl erster Kommunikationseinrichtungen (110) zum Kommunizieren mit der zweiten Kommunikationseinrichtung (120) zu den geschätzten (702) Geschwindigkeitsinformationen der zweiten Kommunikationseinrichtung (120) proportional bestimmt wird, derart, dass mehr erste Kommunikationseinrichtungen (110) aktiviert werden, um mit der zweiten Kommunikationseinrichtung (120) zu kommunizieren, wenn eine Hochgeschwindigkeitsinformation der zweiten Kommunikationseinrichtung (120) geschätzt (702) wird, als dann, wenn eine Niedergeschwindigkeitsinformation geschätzt (702) wird.

29. Verfahren (700) nach einem der Ansprüche 17-28, wobei der Antennenstrahl (140) der ersten Kommunikationseinrichtung (110) in mehrere Öffnungswinkelmodi, die jeweils einem Schwellenwertintervall der Geschwindigkeit der ersten Kommunikationseinrichtung zwischen einem oberen Schwellenwertgrenzwert und einem unteren Schwellenwertgrenzwert zugeordnet sind, einstellbar ist.

30. Erste Kommunikationseinrichtung (110) zum Einstellen einer Strahlform eines Antennenstrahls (140) der ersten Kommunikationseinrichtung in einer Funkverbindung zwischen der ersten Kommunikationseinrichtung (110) und einer zweiten Kommunikationseinrichtung (120), wobei die Strahlform in einen engen Öffnungswinkelmodus und einen weiten Öffnungswinkelmodus einstellbar ist und die erste Kommunikationseinrichtung (110) Folgendes umfasst:
einen Prozessor (820), der konfiguriert ist zum Erhalten von Informationen von der zweiten Kommunikationseinrichtung (120) und außerdem konfiguriert ist zum Einstellen der Strahlform des Antennenstrahls (140) der ersten Kommunikationseinrichtung in den engen Öffnungswinkelmodus oder den weiten Öffnungswinkelmodus auf der Grundlage der empfangenen Informationen; wobei die empfangenen (701) Informationen Folgendes umfassen:
Orientierungsinformationen, die an der zweiten Kommunikationseinrichtung (120) gemessen wurden, und Geschwindigkeitsinformationen der zweiten Kommunikationseinrichtung (120);
die Geschwindigkeitsinformationen der zweiten Kommunikationseinrichtung (120) Folgendes umfassen: eine Winkelgeschwindigkeit der zweiten Kommunikationseinrichtung (120) und eine Lineargeschwindigkeit der zweiten Kommunikationseinrichtung (120); und
die empfangenen (701) Informationen einen Betriebsmodus der zweiten Kommunikationseinrichtung (120) umfassen, wobei das Einstellen (705) der Strahlform des Antennenstrahls der ersten Kommunikationseinrichtung auf der Grundlage des bestimmten Betriebsmodus der zweiten Kommunikationseinrichtung (120) erfolgt.

31. Erste Kommunikationseinrichtung (110) nach Anspruch 30, wobei der Prozessor (820) ferner konfiguriert ist, das Verfahren (700) nach einem der Ansprüche 17-29 zu implementieren.

32. Computerprogramm, das Programmcode zum Durchführen eines Verfahrens (700) nach einem der Ansprüche 17-29 zum Einstellen einer Strahlform eines Antennenstrahls (140) der ersten Kommunikationseinrichtung in einer Funkverbindung zwischen einer ersten Kommunikationseinrichtung (110) und einer zweiten Kommunikationseinrichtung (120) umfasst, wobei die Strahlform in einen engen Öffnungswinkelmodus und einen weiten Öffnungswinkelmodus einstellbar ist.

33. Computerprogrammprodukt, das ein computerlesbares Speichermedium umfasst, in dem Programmcode zum Einstellen der Strahlform eines Antennenstrahls (140) der ersten Kommunikationseinrichtung in einer Funkverbindung zwischen einer ersten Kommunikationseinrichtung (110) und einer zweiten Kommunikationseinrichtung (120) gespeichert ist, wobei die Strahlform in einen engen Öffnungswinkelmodus und einen weiten Öffnungswinkelmodus einstellbar ist und der Programmcode Anweisungen zum Ausführen eines Verfahrens (700) umfasst, das Folgendes umfasst:
Empfangen (701) von Informationen von der zweiten Kommunikationseinrichtung (120); und
Einstellen (705) einer Strahlform eines Antennenstrahls (140) der ersten Kommunikationseinrichtung in den engen Öffnungswinkelmodus oder den weiten Öffnungswinkelmodus auf der Grundlage der empfangenen (701) Informationen; wobei
die empfangenen (701) Informationen Folgendes umfassen:
Orientierungsinformationen, die an der zweiten Kommunikationseinrichtung (120) gemessen wurden, und Geschwindigkeitsinformationen der zweiten Kommunikationseinrichtung (120);
die Geschwindigkeitsinformationen der zweiten Kommunikationseinrichtung (120) Folgendes umfassen: eine Winkelgeschwindigkeit der zweiten Kommunikationseinrichtung (120) und eine Lineargeschwindigkeit der zweiten Kommunikationseinrichtung (120); und
die empfangenen (701) Informationen einen Betriebsmodus der zweiten Kommunikationseinrichtung (120) umfassen, wobei das Einstellen (705) der Strahlform des Antennenstrahls der ersten Kommunikationseinrichtung auf der Grundlage des bestimmten Betriebsmodus der zweiten Kommunikationseinrichtung (120) erfolgt.

## Revendications

1. Procédé (500) dans un second dispositif de communication (120) pour régler une forme de faisceau d'un faisceau d'antenne de second dispositif de communication (130) dans une liaison radio entre un premier dispositif de communication (110) et le second dispositif de communication (120), ladite forme de faisceau étant réglable dans un mode de largeur de faisceau étroite et un mode de largeur de faisceau large, le procédé (500) consistant à :
mesurer (501) une information d'orientation du second dispositif de communication (120) ;
calculer (502) une information de vitesse relative au second dispositif de communication (120), sur la base de l'information d'orientation mesurée (501) ; et
régler (505) une forme de faisceau du faisceau d'antenne de second dispositif de communication (130) dans un mode quelconque parmi le mode de largeur de faisceau étroite et le mode de largeur de faisceau large, sur la base de l'information de vitesse calculée (502) ;
l'information de vitesse calculée (502) comprenant : une vitesse angulaire du second dispositif de communication (120) et une vitesse linéaire du second dispositif de communication (120) ; et
le procédé consistant en outre à :
déterminer (504) un mode de fonctionnement du second dispositif de communication (120), le réglage (505) de la forme de faisceau d'antenne de second dispositif de communication étant basé sur le mode de fonctionnement déterminé (504).

2. Procédé (500) selon la revendication 1, dans lequel la forme de faisceau du faisceau d'antenne de second dispositif de communication (130) est réglable par conformation de faisceau du faisceau d'antenne de second dispositif de communication (130) par l'intermédiaire d'un contrôle de phase de signaux au niveau d'une antenne (650) du second dispositif de communication (120) et/ou par changement de bande spectrale de fonctionnement pour le premier dispositif de communication (110) et le second dispositif de communication (120), une haute fréquence étant utilisée dans le mode de largeur de faisceau étroite et une basse fréquence étant utilisée dans le mode de largeur de faisceau large.

3. Procédé (500) selon l'une quelconque des revendications 1 et 2, le procédé (500) consistant en outre à :
comparer (503) l'information de vitesse calculée (502) à une limite de seuil ; et le faisceau d'antenne de second dispositif de communication (130) étant réglé (505) dans le mode de largeur de faisceau étroite quand l'information de vitesse calculée (502) est inférieure à la limite de seuil et réglée (505) dans le mode de largeur de faisceau large quand l'information de vitesse dépasse la limite de seuil.

4. Procédé (500) selon la revendication 1, dans lequel le faisceau d'antenne de second dispositif de communication (130) est réglé (505) dans le mode de largeur de faisceau large quand le mode de fonctionnement déterminé (504) est INACTIF.

5. Procédé (500) selon l'une quelconque des revendications 1 à 4, consistant en outre à augmenter une puissance de transmission du faisceau d'antenne de second dispositif de communication (130) quand celui-ci est réglé (505) dans le mode de largeur de faisceau large.

6. Procédé (500) selon l'une quelconque des revendications 1 à 5, consistant en outre, quand le faisceau d'antenne de second dispositif de communication (130) est réglé (505) d'un mode de faisceau d'antenne à un autre mode de faisceau d'antenne, à informer le premier dispositif de communication (110) du changement de mode de faisceau d'antenne de second dispositif de communication.

7. Procédé (500) selon l'une quelconque des revendications 1 à 6, consistant en outre à :
fournir (506) au premier dispositif de communication (110) une information comprenant l'information d'orientation mesurée (501), l'information de vitesse calculée (502), le mode de fonctionnement déterminé (504) du second dispositif de communication (120), une indication d'un changement de mode de faisceau d'antenne de second dispositif de communication et/ou un changement de bande spectrale de fonctionnement.

8. Procédé (500) selon l'une quelconque des revendications 1 à 7, dans lequel la direction du faisceau d'antenne de second dispositif de communication (130) est réglée sur la base de l'information d'orientation mesurée (501).

9. Procédé (500) selon l'une quelconque des revendications 1 à 8, dans lequel la bande spectrale de fonctionnement pour le premier dispositif de communication (110) et le second dispositif de communication (120) est changée pour une autre bande spectrale de fonctionnement quand le mode de forme de faisceau du faisceau d'antenne de second dispositif de communication (130) est réglé (505).

10. Procédé (500) selon l'une quelconque des revendications 1 à 9, dans lequel le faisceau d'antenne (130) du second dispositif de communication (120) est réglable dans une pluralité de modes de largeur de faisceau, associés chacun à un intervalle de limite de seuil de vitesse de second dispositif de communication entre une limite de seuil supérieure et une limite de seuil inférieure.

11. Procédé (500) selon l'une quelconque des revendications 1 à 10, dans lequel le second dispositif de communication (120) est représenté par un terminal mobile et le premier dispositif de communication (110) est représenté par un nœud de réseau.

12. Second dispositif de communication (120) pour régler une forme de faisceau d'un faisceau d'antenne de second dispositif de communication (130) dans une liaison radio entre un premier dispositif de communication (110) et le second dispositif de communication (120), ladite forme de faisceau étant réglable dans un mode de largeur de faisceau étroite et un mode de largeur de faisceau large, le second dispositif de communication (120) comprenant :
un capteur (640), configuré pour mesurer une information d'orientation du second dispositif de communication (120) ; et
un processeur (620), configuré pour calculer une information de vitesse relative au second dispositif de communication (120), sur la base de l'information d'orientation mesurée, et également configuré pour régler une forme de faisceau du faisceau d'antenne de second dispositif de communication (130) dans un mode quelconque parmi le mode de largeur de faisceau étroite et le mode de largeur de faisceau large, sur la base de l'information de vitesse calculée ;
l'information de vitesse calculée comprenant : une vitesse angulaire du second dispositif de communication (120) et une vitesse linéaire du second dispositif de communication (120) ;
le processeur (620) étant en outre configuré pour :
déterminer (504) un mode de fonctionnement du second dispositif de communication (120), le réglage (505) de la forme de faisceau d'antenne de second dispositif de communication étant basé sur le mode de fonctionnement déterminé (504).

13. Second dispositif de communication (120) selon la revendication 12, dans lequel le processeur (620) est en outre configuré pour régler la forme de faisceau du faisceau d'antenne de second dispositif de communication (130) par conformation de faisceau du faisceau d'antenne de second dispositif de communication (130) par l'intermédiaire d'un contrôle de phase de signaux au niveau d'une antenne (650) du second dispositif de communication (120) et/ou par changement de bande spectrale de fonctionnement pour le premier dispositif de communication (110) et le second dispositif de communication (120), une haute fréquence étant utilisée dans le mode de largeur de faisceau étroite et une basse fréquence étant utilisée dans le mode de largeur de faisceau large.

14. Second dispositif de communication (120) selon l'une quelconque des revendications 12 et 13, dans lequel le processeur (620) est en outre configuré pour mettre en œuvre le procédé (500) selon l'une quelconque des revendications 2 à 11.

15. Programme informatique comprenant un code de programme pour réaliser un procédé (500) selon l'une quelconque des revendications 1 à 11, pour régler une forme de faisceau d'un faisceau d'antenne de second dispositif de communication (130) dans une liaison radio entre un premier dispositif de communication (110) et le second dispositif de communication (120), ladite forme de faisceau étant réglable dans un mode de largeur de faisceau étroite et un mode de largeur de faisceau large.

16. Produit de programme informatique comprenant un support de stockage lisible par ordinateur sur lequel est stocké un code de programme pour régler une forme de faisceau d'un faisceau d'antenne de second dispositif de communication (130) dans une liaison radio entre un premier dispositif de communication (110) et le second dispositif de communication (120), ladite forme de faisceau étant réglable dans un mode de largeur de faisceau étroite et un mode de largeur de faisceau large, le code de programme comprenant des instructions pour exécuter un procédé (500) consistant à :
mesurer (501) une information d'orientation du second dispositif de communication (120) ;
calculer (502) une information de vitesse relative au second dispositif de communication (120), sur la base de l'information d'orientation mesurée (501) ; et
régler (505) une forme de faisceau du faisceau d'antenne de second dispositif de communication (130) dans un mode quelconque parmi le mode de largeur de faisceau étroite et le mode de largeur de faisceau large, sur la base de l'information de vitesse calculée (502) ;
l'information de vitesse calculée (502) comprenant : une vitesse angulaire du second dispositif de communication (120) et une vitesse linéaire du second dispositif de communication (120) ;
le procédé consistant en outre à :
déterminer (504) un mode de fonctionnement du second dispositif de communication (120), le réglage (505) de la forme de faisceau d'antenne de second dispositif de communication étant basé sur le mode de fonctionnement déterminé (504).

17. Procédé (700) dans un premier dispositif de communication (110) pour régler une forme de faisceau d'un faisceau d'antenne de premier dispositif de communication (140) dans une liaison radio entre le premier dispositif de communication (110) et un second dispositif de communication (120), ladite forme de faisceau étant réglable dans un mode de largeur de faisceau étroite et un mode de largeur de faisceau large, le procédé (700) consistant à :
recevoir (701) une information en provenance du second dispositif de communication (120) ; et
régler (705) une forme de faisceau du faisceau d'antenne de premier dispositif de communication (140) dans un mode quelconque parmi le mode de largeur de faisceau étroite et le mode de largeur de faisceau large, sur la base de l'information reçue (701) ;
l'information reçue (701) comprenant : une information d'orientation mesurée sur le second dispositif de communication (120) et une information de vitesse du second dispositif de communication (120) ;
ladite information de vitesse du second dispositif de communication (120) comprenant : une vitesse angulaire du second dispositif de communication (120) et une vitesse linéaire du second dispositif de communication (120) ; et
l'information reçue (701) comprenant un mode de fonctionnement du second dispositif de communication (120), le réglage (705) de la forme de faisceau d'antenne de premier dispositif de communication étant basé sur le mode de fonctionnement du second dispositif de communication (120).

18. Procédé (700) selon la revendication 17, dans lequel la forme de faisceau du faisceau d'antenne de premier dispositif de communication (140) est réglable par conformation de faisceau du faisceau d'antenne de premier dispositif de communication (140) par l'intermédiaire d'un contrôle de phase de signaux au niveau d'une antenne (850) du premier dispositif de communication (110) et/ou par changement de bande spectrale de fonctionnement pour le premier dispositif de communication (110) et le second dispositif de communication (120), une haute fréquence étant utilisée dans le mode de largeur de faisceau étroite et une basse fréquence étant utilisée dans le mode de largeur de faisceau large.

19. Procédé (700) selon la revendication 17 ou 18, consistant en outre à :
estimer (702) une information de vitesse du second dispositif de communication (120), sur la base de l'information reçue (701) ; et
comparer (703) l'information de vitesse estimée (702) à une limite de seuil ; et
le faisceau d'antenne de premier dispositif de communication (140) étant réglé (705) dans le mode de largeur de faisceau étroite quand l'information de vitesse estimée (702) est inférieure à la limite de seuil et réglée (705) dans le mode de largeur de faisceau large quand l'information de vitesse dépasse la limite de seuil.

20. Procédé (700) selon l'une quelconque des revendications 17 à 19, dans lequel le faisceau d'antenne de premier dispositif de communication (140) est réglé (705) dans le mode de largeur de faisceau large quand le mode de fonctionnement du second dispositif de communication (120) est INACTIF.

21. Procédé (700) selon l'une quelconque des revendications 17 à 20, dans lequel la puissance de transmission du faisceau d'antenne de premier dispositif de communication (140) est augmentée quand la forme de faisceau du faisceau d'antenne de premier dispositif de communication (140) est réglée (705) dans le mode de largeur de faisceau large.

22. Procédé (700) selon l'une quelconque des revendications 17 à 21, consistant en outre à :
recevoir (704) une information relative à un changement de mode de faisceau d'antenne de second dispositif de communication, le réglage (705) de la forme de faisceau du faisceau d'antenne de premier dispositif de communication (140) étant effectué de manière à correspondre au mode de faisceau d'antenne du second dispositif de communication (120).

23. Procédé (700) selon l'une quelconque des revendications 17 à 22, dans lequel la direction du faisceau d'antenne de premier dispositif de communication (140) est réglée sur la base de l'information reçue (701) en provenance du second dispositif de communication (120).

24. Procédé (700) selon l'une quelconque des revendications 17 à 23, dans lequel la bande spectrale de fonctionnement pour le premier dispositif de communication (110) et le second dispositif de communication (120) est changée pour une autre bande spectrale de fonctionnement quand le mode de forme de faisceau du faisceau d'antenne de premier dispositif de communication (140) est réglé (705).

25. Procédé (700) selon l'une quelconque des revendications 17 à 24, consistant en outre à attribuer une largeur de bande spectrale réduite au second dispositif de communication (120) quand le faisceau d'antenne de premier dispositif de communication (140) est réglé (705) du mode de largeur de faisceau étroite au mode de largeur de faisceau large.

26. Procédé (700) selon l'une quelconque des revendications 17 à 25, consistant en outre, quand le faisceau d'antenne de premier dispositif de communication (140) est réglé (705) d'un mode à un autre, à informer le second dispositif de communication (120) du changement de mode de faisceau d'antenne de premier dispositif de communication.

27. Procédé (700) selon l'une quelconque des revendications 17 à 26, dans lequel le second dispositif de communication (120) est configuré pour communiquer avec une pluralité de premiers dispositifs de communication (110), et le procédé consistant en outre à déterminer le nombre de premiers dispositifs de communication (110) communiquant avec le second dispositif de communication (120), sur la base de l'information reçue (701) en provenance du second dispositif de communication (120).

28. Procédé (700) selon la revendication 27, dans lequel le nombre de premiers dispositifs de communication (110) pour communiquer avec le second dispositif de communication (120) est déterminé proportionnellement à l'information de vitesse estimée (702) du second dispositif de communication (120) de sorte que davantage de premiers dispositifs de communication (110) soient autorisés à communiquer avec le second dispositif de communication (120) quand une information de grande vitesse du second dispositif de communication (120) est estimée (702) que quand une information de basse vitesse est estimée (702).

29. Procédé (700) selon l'une quelconque des revendications 17 à 28, dans lequel le faisceau d'antenne (140) du premier dispositif de communication (110) est réglable dans une pluralité de modes de largeur de faisceau, associés chacun à un intervalle de limite de seuil de vitesse de premier dispositif de communication entre une limite de seuil supérieure et une limite de seuil inférieure.

30. Premier dispositif de communication (110) pour régler une forme de faisceau d'un faisceau d'antenne de premier dispositif de communication (140) dans une liaison radio entre le premier dispositif de communication (110) et un second dispositif de communication (120), ladite forme de faisceau étant réglable dans un mode de largeur de faisceau étroite et un mode de largeur de faisceau large, le premier dispositif de communication (110) comprenant :
un processeur (820), configuré pour obtenir une information en provenance du second dispositif de communication (120) ; et également configuré pour régler une forme de faisceau du faisceau d'antenne de premier dispositif de communication (140) dans un mode quelconque parmi le mode de largeur de faisceau étroite et le mode de largeur de faisceau large, sur la base de l'information reçue ;
l'information reçue (701) comprenant : une information d'orientation mesurée sur le second dispositif de communication (120) et une information de vitesse du second dispositif de communication (120) ;
ladite information de vitesse du second dispositif de communication (120) comprenant : une vitesse angulaire du second dispositif de communication (120) et une vitesse linéaire du second dispositif de communication (120) ;
l'information reçue (701) comprenant un mode de fonctionnement du second dispositif de communication (120), le réglage (705) de la forme de faisceau d'antenne de premier dispositif de communication étant basé sur le mode de fonctionnement du second dispositif de communication (120).

31. Premier dispositif de communication (110) selon la revendication 30, dans lequel le processeur (820) est en outre configuré pour mettre en œuvre le procédé (700) selon l'une quelconque des revendications 17 à 29.

32. Programme informatique comprenant un code de programme pour réaliser un procédé (700) selon l'une quelconque des revendications 17 à 29, pour régler une forme de faisceau d'un faisceau d'antenne de premier dispositif de communication (140) dans une liaison radio entre un premier dispositif de communication (110) et un second dispositif de communication (120), ladite forme de faisceau étant réglable dans un mode de largeur de faisceau étroite et un mode de largeur de faisceau large.

33. Produit de programme informatique comprenant un support de stockage lisible par ordinateur sur lequel est stocké un code de programme pour régler une forme de faisceau d'un faisceau d'antenne de premier dispositif de communication (140) dans une liaison radio entre un premier dispositif de communication (110) et un second dispositif de communication (120), ladite forme de faisceau étant réglable dans un mode de largeur de faisceau étroite et un mode de largeur de faisceau large, le code de programme comprenant des instructions pour exécuter un procédé (700) consistant à :
recevoir (701) une information en provenance du second dispositif de communication (120) ; et
régler (705) une forme de faisceau du faisceau d'antenne de premier dispositif de communication (140) dans un mode quelconque parmi le mode de largeur de faisceau étroite et le mode de largeur de faisceau large, sur la base de l'information reçue (701) ;
l'information reçue (701) comprenant : une information d'orientation mesurée sur le second dispositif de communication (120) et une information de vitesse du second dispositif de communication (120) ;
ladite information de vitesse du second dispositif de communication (120) comprenant : une vitesse angulaire du second dispositif de communication (120) et une vitesse linéaire du second dispositif de communication (120) ;
l'information reçue (701) comprenant un mode de fonctionnement du second dispositif de communication (120), le réglage (705) de la forme de faisceau d'antenne de premier dispositif de communication étant basé sur le mode de fonctionnement du second dispositif de communication (120).
